(19) Europäisches Patentamt
European Patent Office
Office européen des brevets

(11) Veröffentlichungsnummer: **0 248 858**
**B1**

(12) # EUROPÄISCHE PATENTSCHRIFT

(45) Veröffentlichungstag der Patentschrifft: **28.02.90**

(51) Int. Cl.[5]: **C 07 F 9/09**, C 07 F 9/24, A 61 K 31/66

(21) Anmeldenummer: **87900102.2**

(22) Anmeldetag: **04.12.86**

(86) Internationale Anmeldenummer: **PCT/EP 86/00707**

(87) Internationale Veröffentlichungsnummer: **WO 87/03596 (18.06.87 Gazette 87/13)**

(54) **NEUE PHOSPHORVERBINDUNGEN UND DIESE ENTHALTENDE ARZNEIMITTEL.**

(30) Priorität: **04.12.85 DE 3542894**
**28.02.86 DE 3606633**

(43) Veröffentlichungstag der Anmeldung: **16.12.87 Patentblatt 87/51**

(45) Bekanntmachung des Hinweises auf die Patenterteilung: **28.02.90 Patentblatt 90/09**

(84) Bennante Vertragsstaaten: **AT BE CH DE ES FR GB GR IT LI LU NL SE**

(56) Entgegenhaltungen:
**EP-A-0 061 872**
**EP-A-0 121 088**

**Die Akte enthält technische Angaben, die nach dem Eingang der Anmeldung eingereicht wurden und die nicht in dieser Patentschrift enthalten sind.**

(73) Patentinhaber: **Max-Planck-Gesellschaft zur Förderung der Wissenschaften e.V.**
**Bunsenstrasse 10**
**D-3400 Göttingen (DE)**

(72) Erfinder: **EIBL, Hansjörg**
**Steinweg 51**
**D-3406 Bovenden (DE)**

(74) Vertreter: **Huber, Bernhard, Dipl.-Chem.**
**Patentanwälte H. Weickmann, Dr. K. Fincke F.A. Weickmann, B. Huber Dr. H. Liska, Dr. J. Prechtel**
**Möhlstrasse 22 Postfach 860 820**
**D-8000 München 86 (DE)**

**EP 0 248 858 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

**Beschreibung**

Die Erfindung betrifft neue Phosphoverbindungen und diese enthaltende Arzneimittel, welche sich besonders zur Behandlung von Tumoren eignen.

Es ist bekannt, daß bisher kein in jeder Hinsicht zufriedenstellendes Arzneimittel zur Behandlung von Tumoren, insbesondere von bösartigen Tumoren, zur Verfügung steht. So ist beispielsweise zur topischen Behandlung von Hautmetastasen bei Patienten mit metastasierenden Tumoren derzeit lediglich 5-Fluorouracil verfügbar. Weiterentwicklungen anderer Cytostatika sind für diese Applikationsart bisher nicht bis zur Klinikreife verfolgt worden. Andererseits ist aus klinischer Sicht ein solches Konzept im palliativen Therapieansatz besonders erwünscht, da alternative Behandlungskonzepte wie chirurgische Maßnahmen, Strahlentherapie und systemische Chemotherapie, vergleichsweise aggressive Therapiemodalitäten darstellen. Außerdem liegt eine beträchtliche Zahl von Patienten als potentielle Behandlungskandidaten für eine solche topische Behandlung vor. So beträgt z. B. der Anteil der Mamma-Karzinom-Patienten, die einen Hautbefall aufweisen, etwa 25 bis 35 %.

Die Voraussetzung zur topischen Behandlung seitens des einzusetzenden Wirkstoffes sind Verträglichkeit auf der Haut, cytotoxische Wirksamkeit gegen Tumorzellen und ausreichende Tiefenpenetration.

Aus EP-A1-0 061 872 sind Ethylenglykolderivate bekannt, bei denen eine OH-Gruppe mit einer aliphatischen Kohlenwasserstoffgruppe veräthert ist und an dem anderen O-Atom ein Phosphocholinrest sitzt. Da der Phosphocholinrest hier an einem primären O-Atom gebunden ist, werden diese Substanzen von O-Alkyl-spaltenden Enzymen gespalten und zeigen keine ausreichende therapeutische Wirksamkeit.

Ziel der Erfindung ist daher in erster Linie, neue Verbindungen und Arzneimittel zu schaffen, welche zur topischen Behandlung von Tumoren geeignet sind. Ein weiteres Ziel der Erfindung ist es darüberhinaus, generell auch in anderen Applikationsformen anwendbare Verbindungen und Arzneimittel zu schaffen, welche eine gute Wirksamkeit gegen Tumore mit geringer Toxizität verbinden und daher allgemein in der Tumortherapie einsetzbar sind.

Diese Aufgaben werden erfindungsgemäß gelöst durch Verbindungen der allgemeinen Formel I

$$\begin{array}{l} CH_2-O-R \\ | \\ CH-O-PO^{\theta}_2-X-R_1 \\ | \\ (CH_2)_n \\ | \\ CH_3 \end{array} \qquad \text{I}$$

in der

R einen gesättigten oder ungesättigten Kohlenwasserstoffrest mit 12 bis 24 C-Atomen bedeutet, der auch halogensubstituiert sein kann,

X ein Sauerstoffatom, NH oder $NR_2$ ist,

n eine ganze Zahl von 0 bis 10 bedeutet,

$R_1$ eine $C_1$-$C_8$-Alkylgruppe ist oder worin $R_1$ eine $C_2$-$C_8$-Alkylgruppe darstellt, die ungesättigt und/oder mit Halogen, Amino, $C_1$-$C_6$-Alkylamino, Di-$C_1$-$C_6$-alkylamino, Tri-$C_1$-$C_6$-alkylamino, Hydroxy, Carboxy, $C_3$-$C_8$-Cycloalkyl oder Phenyl substituiert ist,

und worin $R_1$ außerdem auch 2-tert.-Butyloxycarbonylaminoethyl, 2-tert.-butyloxycarbonylethyl, 2,3-Isopropyl-idendioxy-propyl-(1), 2,3-Dibenzyloxy-propyl-(1), 1,3-Dibenzyloxy-propyl-(2) oder N-$C_1$-$C_6$-Alkylamino-$C_2$-$C_6$-alkyl bedeuten kann, wenn X ein Sauerstoffatom ist, und worin $R_1$ außerdem auch 2,3-Dihydroxypropyl-(1) bedeuten kann, wenn X die NH-Gruppe ist,

und $R_2$ eine 2,3-Dihydroxypropyl-(1)-gruppe, eine $C_1$-$C_8$-Alkylgruppe oder eine $C_2$-$C_8$-Alkylgruppe, die ungesättigt und/oder mit Halogen, Amino, $C_1$-$C_6$-Alkylamino, Di-$C_1$-$C_6$-alkylamino, Tri-$C_1$-$C_6$-alkylamino, Hydroxy, Carboxy, $C_3$-$C_8$-Cycloalkyl oder Phenyl substituiert ist, darstellt, und deren physiologisch verträgliche Salze.

Die Formel I umfaßt auch die möglichen Enantiomere und Diasteromere. Falls die Verbindungen Racemate sind, können diese in an sich bekannter Weise, z. B. mittels einer optisch aktiven Säure, in die optisch aktiven Isomere gespalten werden. Bevorzugt werden jedoch von vornherein enantiomere oder gegebenenfalls diastereomere Ausgangsstoffe eingesetzt, wobei dann als Endprodukt eine entsprechende reine optisch aktive bzw. diastereomere Verbindung erhalten wird.

Im Rahmen der Erfindung ist R vorzugsweise eine Alkylgruppe der angegebenen Kettenlänge, die mit dem Sauerstoff des Glykolrestes über ein endständiges C-Atom oder auch über ein C-Atom innerhalb der Alkylkette verknüpft ist (z. B. über das C-Atom 2 oder C-Atom 3 oder ein anderes mittleres C-Atom). Diese Alkylkette kann geradkettig oder verzweigt sein. Die Alkylkette R kann eine, zwei oder drei Kohlenstoff-Doppelbindungen oder Dreifachbindungen, die auch gemischt vorliegen können, enthalten und/oder Halogensubstituenten aufweisen. Als Halogenatome kommen in Frage: Fluor, Chlor oder Brom. In der Kette R können ein bis drei solcher Halogenatome vorliegen, wobei diese sich an einem oder an verschiedenen C-Atomen des Restes R befinden können.

Bevorzugt werden neben den gesättigten geradkettigen Alkylresten solche mit ein oder zwei Kohlenstoffdoppelbindungen im Molekül. Besonders bevorzugt werden solche Substituenten R, welche einen Alkylrest mit 14

bis 20, vorzugsweise 15 bis 20, insbesondere 16 bis 20 C-Atomen oder einen entsprechenden Alkenylrest mit 14 bis 20, vorzugsweise 15 bis 20, insbesondere 16 bis 20 C-Atomen enthalten.

Beispiele für halogensubstituierte Reste R sind: Chlorhexadecyl, Bromhexadecyl, Fluorhexadecyl, 9,10-Dibromoctadecyl, 2,3-Dibromoctadecyl, 15,16-Dibromhexadecyl, Bromtetradecyl.

Beispiele für ungesättigte Reste R sind: 9-Octadecenylrest (Oleylalkoholrest), 15-Hexadecenylrest, 9,12-Octadecdienylrest (Linoleylrest).

Falls mehr als eine Doppel- oder Dreifachbindung vorliegt, sind diese konjungiert. Beispiele für gesättigte und unsubstituierte Reste R sind: Tetradecylrest, Hexadecylrest, Octadecylrest.

Falls $R_1$ beziehungsweise $R_2$ eine unsubstituierte Alkylgruppe bedeuten, besteht diese zum Beispiel aus 1 - 6, vorzugsweise 1-4 C-Atomen. Falls $R_1$ beziehungsweise $R_2$ eine ungesättigte Alkylgruppe bedeutet, besteht sie insbesondere aus 3 bis 6 C-Atomen, wobei zwischen der ungesättigten Funktion und X mindestens eine einfache C - C-Bindung stehen muß. Insbesondere handelt es sich um eine $C_3$-$C_6$-Alkenylgruppe. Beispiele hierfür sind: Allyl, Butenyl, Pentenyl, Hexenyl.

Falls $R_1$ beziehungsweise $R_2$ substituiert sind, handelt es sich insbesondere um geradkettige Alkyl- oder Alkenylreste, vorzugsweise besteht $R_1$ in diesem Fall aus 2 - 6 C-Atomen, wobei die angegebenen Substituenten vorzugsweise in der ω-Stellung der Alkyl- beziehungsweise Alkenylgruppe $R_1$ beziehungsweise $R_2$ stehen; beispielsweise handelt es sich um den Ethyl- oder geraden Propylrest mit einem der angegebenen Substituenten in ω-Stellung (das heißt in 2-Stellung bei Ethyl und 3-Stellung bei Propyl). Falls $R_1$ ein 2-tert.-Butyloxycarbonylaminoethyl-Rest oder ein 2-tert.-Butyloxycarbonylethyl-Rest ist, handelt es sich vorzugsweise um die D- oder L-Form.

Unter den Substituenten von $R_1$ werden die Trialkylammoniumethylreste bevorzugt, wenn X ein Sauerstoffatom ist, wobei die Trialkylreste vorzugsweise jeweils aus einem, zwei oder drei C-Atomen bestehen, vorzugsweise handelt es sich um Methylgruppen. Besonders bevorzugt ist daher der Trimethylammonium-ethylrest. In dieser besonders bevorzugten Ausführungsform handelt es sich bei den Verbindungen der Formel I um Phosphatidylcholinderivate.

Im Falle des $C_3$-$C_8$-Cycloalkyl-Substituenten besteht dieser insbesondere aus 3 bis 6 C-Atomen (z. B. Cyclopropyl bis Cyclohexyl). Bei der 2,3-Dihydroxy-propyl-(1)-gruppe handelt es sich insbesondere um die sn-1,2-di-hydroxy-propylamino-(3)-Struktur oder um die sn-2,3-di-hydroxy-propylamino-(1)-Struktur.

Besonders bevorzugte Verbindungen sind 1-Hexadecyl-propandiol-(1,2)-phosphocholin, 1-Oleyl-propandiol-(1,2)-phosphocholin, 1-Hexadecyl-propandiol-(1,2)-phospho-(N,N,N-trimethyl)-propanolamin, 1-Oleyl-propandiol-(1,2)-phospho-(N,N,N-trimethyl)-propanolamin, 1-Oleyl-propandiol-(1,2)-phospho-(N,N,N-trimethyl)-butanolamin, 1-Hexadecyl-propandiol-(1,2)-phospho-(N,N,N-trimethyl)-butanolamin, 1-Oleyl-propandiol-(1,2)-phospho-(N,N,N-trimethyl)-pentanolamin und 1-Hexadecyl-propandiol-(1,2)-phospho-(N,N,N-trimethyl)-pentanolamin.

Als Salze kommen innere Salze in Frage (z. B. wenn $R_1$ eine Trimethylammonio-Alkylgruppe bedeutet) oder Salze mit physiologisch verträglichen Kationen. Die erfindungsgemäßen Arzneimittel beziehungsweise Verbindungen können als innere Salze vorliegen, z. B. wenn $R_1$ eine Aminogruppe enthält. Falls keine inneren Salze vorliegen, bzw. der Rest $R_1$ keine basische Gruppe enthält, wird die negative Ladung der Phosphorsäuregruppe durch ein physiologisch verträgliches Kation abgesättigt. Als solche physiologisch verträglichen Kationen kommen z. B. in Frage: Alkalikationen (Na, K), Erdalkalikationen (Mg, Ca) oder die Kationen von organischen Aminen, wie z. B. Guanidinium-, Morpholinium-, Cyclohexylammoniumkation, Ethylendiammoniumkation, Piperazoniumkation (in beiden letzteren Fällen ein- oder zweibasisch), oder das Kation, welches sich von einem Amin der Formel $NR_aR_bR_c$ ableitet, worin die Reste $R_a$ bis $R_c$ gleich oder verschieden sind und Wasserstoff, $C_1$-$C_2$-Alkylgruppen oder Oxyethylgruppen bedeuten. Falls es sich um Kationen handelt, welche sich von einem Amin der Formel $NR_aR_bR_c$ ableiten, handelt es sich vorzugsweise um das Ammoniumkation oder um ein mit eins bis drei $C_1$-$C_2$-Alkylgruppen substituiertes Ammoniumkation oder um ein mit eins bis drei 2-Hydroxyethylgruppen substituiertes Ammoniumkation.

Ein weiterer Gegenstand der Erfindung ist ein Verfahren zur Herstellung von Verbindungen der Formel I

$$\begin{array}{l} CH_2-O-R \\ | \\ CH-O-PO^{\theta}{}_2-X-R_1 \\ | \\ (CH_2)_n \\ | \\ CH_3 \end{array} \qquad \text{I}$$

in der

R einen gesättigten oder ungesättigten Kohlenwasserstoffrest mit 12 bis 24 C-Atomen bedeutet, der auch halogensubstituiert sein kann,

X ein Sauerstoffatom, NH oder $NR_2$ ist,

n eine ganze Zahl von 0 bis 10 bedeutet,

$R_1$ eine $C_1$-$C_8$-Alkylgruppe ist oder worin $R_1$ eine $C_2$-$C_8$-Alkylgruppe darstellt, die ungesättigt und/oder mit Halogen, Amino, $C_1$-$C_6$-Alkylamino, Di-$C_1$-$C_6$-alkylamino, Tri-$C_1$-$C_6$-alkylamino, Hydroxy, Carboxy, $C_3$-$C_8$-Cycloalkyl oder Phenyl substituiert ist, und worin $R_1$ außerdem auch 2-tert.-Butyloxycarbonyl-aminoethyl, 2-tert.-butyloxycarbonylethyl, 2,3-Isopropyl-idendioxy-propyl-(1), 2,3-Dibenzyloxy-propyl-(1), 1,3-Dibenzyloxy-propyl-(2) oder N-$C_1$-$C_6$-Alkylamino-$C_2$-$C_6$-al-

kyl bedeuten kann, wenn X ein Sauerstoffatom ist, und worin $R_1$ außerdem auch 2,3-Dihydroxypropyl-(1) bedeuten kann, wenn X die NH-Gruppe ist, und

$R_2$ eine 2,3-Dihydroxypropyl-(1)-gruppe, eine $C_1$-$C_8$-Alkylgruppe oder eine $C_2$-$C_8$-Alkylgruppe, die ungesättigt und/oder mit Halogen, Amino, $C_1$-$C_6$-Alkylamino, Di-$C_1$-$C_6$-alkylamino, Tri-$C_1$-$C_6$-alkylamino, Hydroxy, Carboxy, $C_3$-$C_8$-Cycloalkyl oder Phenyl substituiert ist, darstellt, und deren physiologisch verträglichen Salzen, welches dadurch gekennzeichnet ist, daß man eine Verbindung der Formel II

$CH_2 - O - R$
|
$CH - OPOCl_2$
|
$(CH_2)_n$
|
$CH_3$

worin R und n die angegebenen Bedeutungen haben, mit einer Verbindung der Formel III

$HX - R_1$

worin X und $R_1$ die angegebenen Bedeutungen haben, vorhandene Hydroxygruppen, Carboxygruppen, Aminogruppen oder $C_1$-$C_6$-Alkylaminogruppen auch eine übliche Schutzgruppe enthalten können, beziehungsweise 2 benachbarte Hydroxygruppen auch durch ein aliphatisches $C_3$-$C_6$-Keton acetalisiert sein können, in einem inerten Lösungsmittel umsetzt, wobei für den Fall, daß $R_1$ eine freie Hydroxygruppe oder eine freie Aminogruppe an dem C-Atom enthält, das dem C-Atom, welches mit der Gruppe X verknüpft ist, benachbart ist, die erhaltene Reaktionsmischung beziehungweise das erhaltene Reaktionsprodukt zum vollständigen Ringschluß gegebenenfalls auf 60 bis 80°C erwärmt und anschließend gegebenenfalls in einem inerten Mittel mit Wasser, einer anorganischen oder organischen Säure oder mit alkalischen Mitteln behandelt, in den übrigen Fällen die erhaltene Reaktionsmischung beziehungsweise das erhaltene Reaktionsprodukt mit Benzylalkohol, einem $C_1$-$C_6$-Alkanol oder einem ungesättigten $C_2$-$C_6$-Alkohol umsetzt und anschließend das so erhaltene Reaktionsprodukt mit Alkalibromiden, Alkalijodiden, niederen Alkylmagnesiumhalogeniden oder Aminen behandelt, gegebenenfalls in den erhaltenen Verbindungen vorhandene Schutzgruppen abspaltet, gegebenenfalls erhaltene Reaktionsprodukte, bei denen $R_1$ ein Halogenatom enthält, mit Ammoniak oder einem Amin der Formel $NR_3R_4R_5$ umsetzt, wobei die Reste $R_3$, $R_4$ und $R_5$ gleich oder verschieden sind und Wasserstoff oder $C_1$-$C_6$-Alkyl bedeuten, und/oder in erhaltenen Produkten mit einer Aminogruppe diese Aminogruppe durch $C_1$-$C_6$-Alkylgruppen alkyliert, und gegebenenfalls die erhaltenen Produkte in die Salze überführt.

Die Herstellung der Verbindungen gemäß allgemeiner Formel I kann nach an sich bekannter Methode erfolgen, z. B. durch Umsetzung von:

$H_2C - OR$
|
$CH - OH$
|
$(CH_2)_n$
|
$CH_3$

oder einem funktionellen Derivat davon mit Phosphoroxychlorid und Triethylamin, Umsetzung des Produktes mit einer Verbindung $HXR_1$ und saure Spaltung erhalten, wobei R, $R_1$ und X die bereits angegebenen Bedeutungen besitzen.

Das Verfahren wird in den folgenden Reaktionsgleichungen schematisch erläutert, wobei A den Rest

$H_2C - OR$
|
$CH -$
|
$(CH_2)_n$
|
$CH_3$

bedeutet.

1)

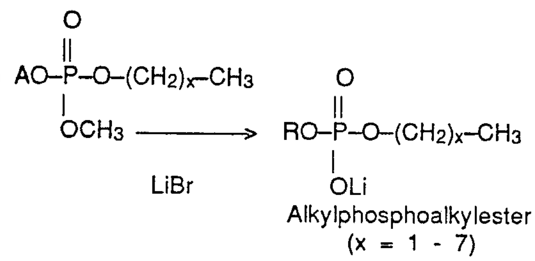
LiBr
Alkylphosphoalkylester
(x = 1 - 7)

2)

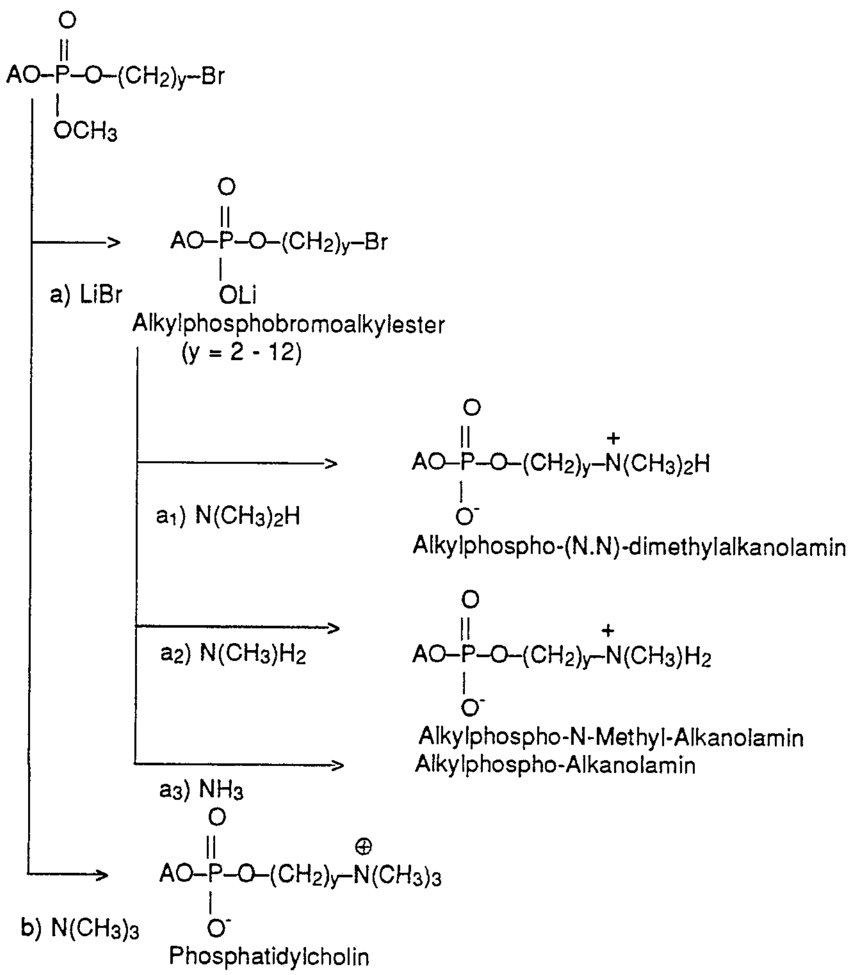
a) LiBr
Alkylphosphobromoalkylester
(y = 2 - 12)
a1) N(CH3)2H
Alkylphospho-(N.N)-dimethylalkanolamin
a2) N(CH3)H2
Alkylphospho-N-Methyl-Alkanolamin
a3) NH3
Alkylphospho-Alkanolamin
b) N(CH3)3
Phosphatidylcholin

3)

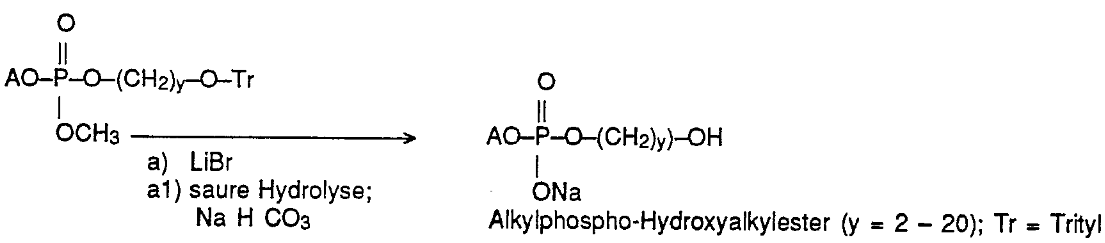
a) LiBr
a1) saure Hydrolyse;
Na H CO3
Alkylphospho-Hydroxyalkylester (y = 2 – 20); Tr = Trityl

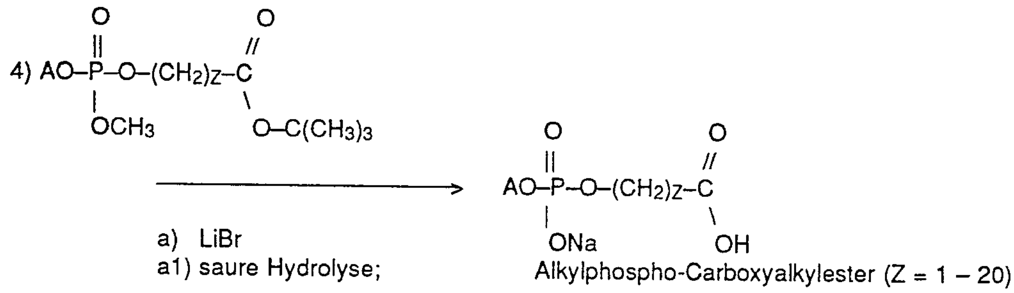


Alkylphospho-Carboxyalkylester (Z = 1 – 20)

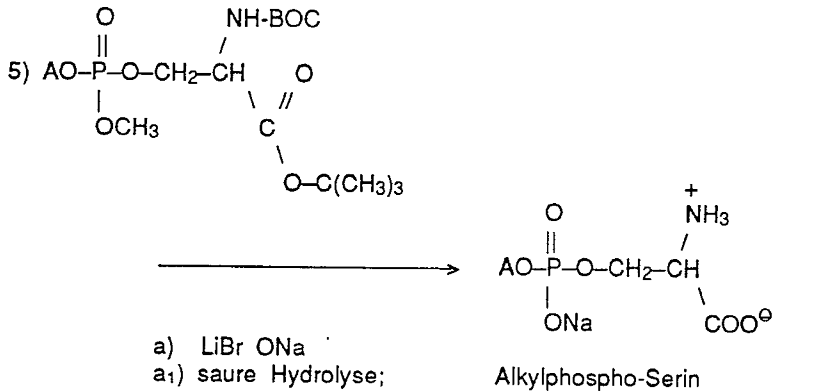


Alkylphospho-Serin
(BOC = tert.-Butoxycarbonyl)

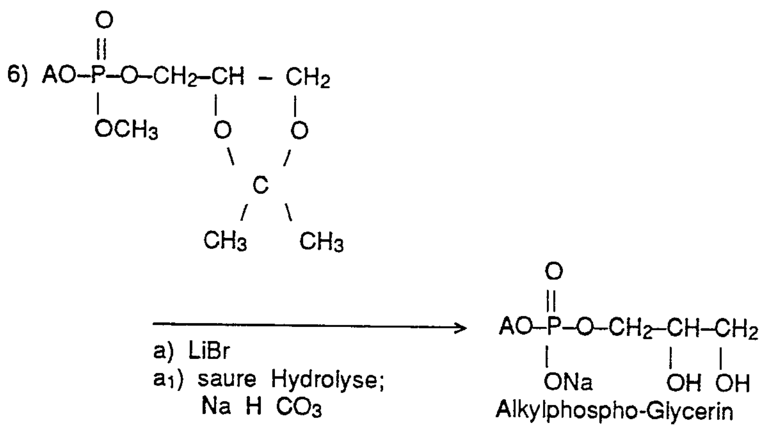


Alkylphospho-Glycerin

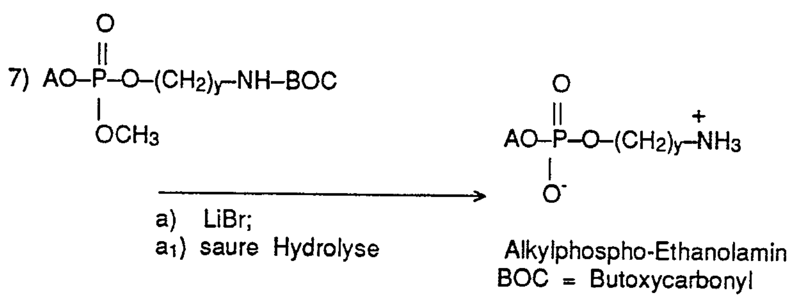


Alkylphospho-Ethanolamin (y = 2 - 20);
BOC = Butoxycarbonyl

8)

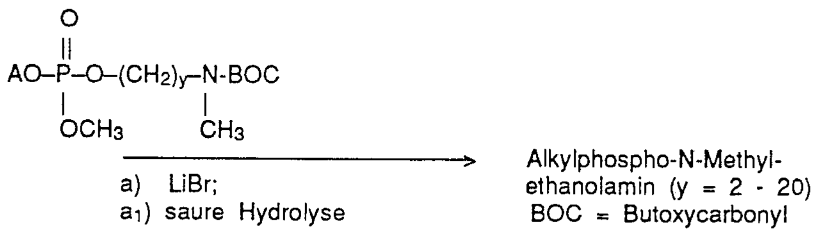
a) LiBr;
$a_1$) saure Hydrolyse
Alkylphospho-N-Methyl-ethanolamin (y = 2 - 20)
BOC = Butoxycarbonyl

9)

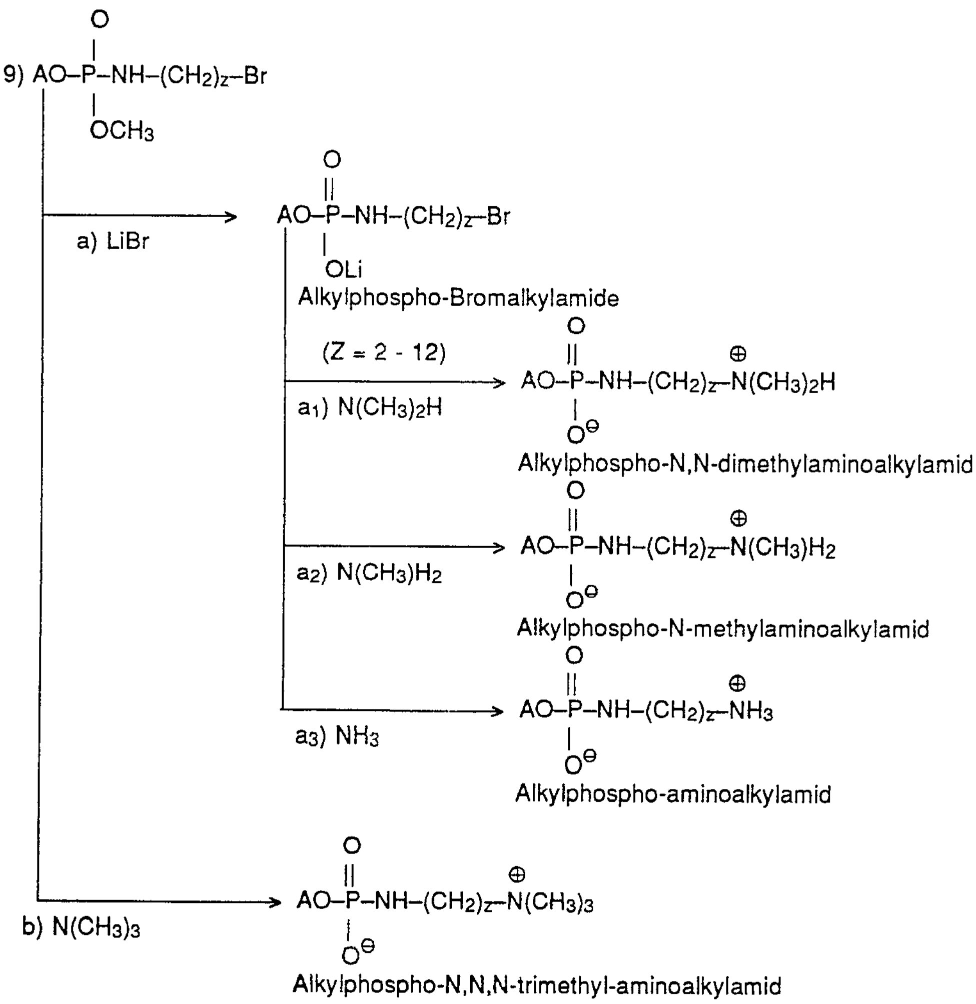
a) LiBr
Alkylphospho-Bromalkylamide
(Z = 2 - 12)
$a_1$) $N(CH_3)_2H$
Alkylphospho-N,N-dimethylaminoalkylamid
$a_2$) $N(CH_3)H_2$
Alkylphospho-N-methylaminoalkylamid
$a_3$) $NH_3$
Alkylphospho-aminoalkylamid
b) $N(CH_3)_3$
Alkylphospho-N,N,N-trimethyl-aminoalkylamid

10)
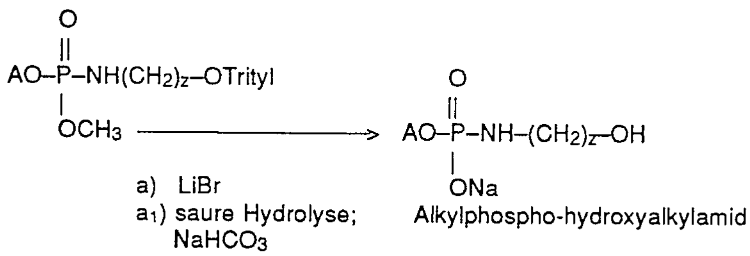

Alkylphospho-hydroxyalkylamid

11)
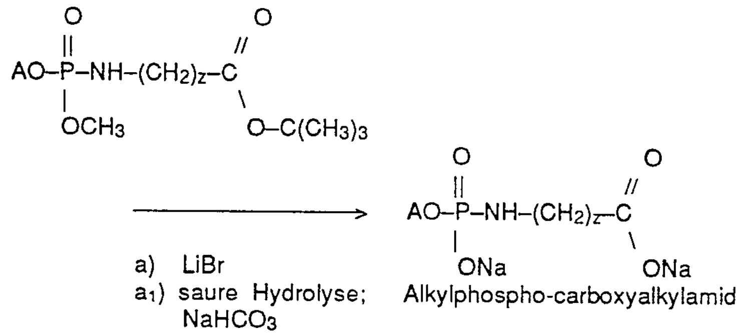

Alkylphospho-carboxyalkylamid

12)
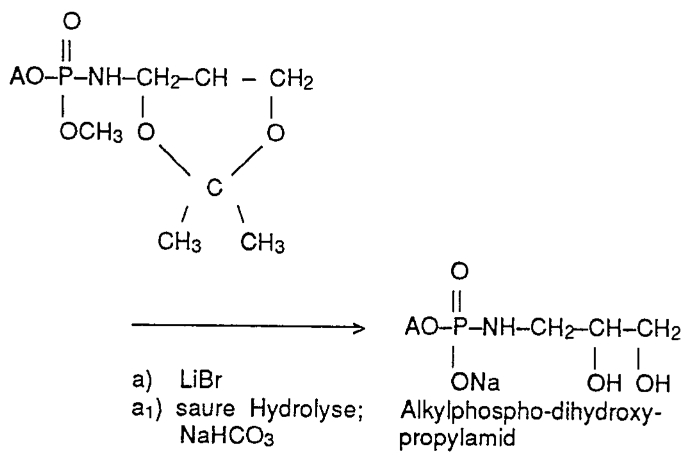

Alkylphospho-dihydroxy-propylamid

Weitere Angaben zu dem erfindungsgemäßen Verfahren:

In den Ausgangsstoffen der Formel III können vorhandene Hydroxygruppen, Carboxygruppen, Aminogruppen oder $C_1$-$C_6$-Alkylaminogruppen, die in dem Rest $R^1$ oder auch in dem Rest $R^2$ (falls X die Gruppe $NR^2$ ist) vorkommen, durch übliche Schutzgruppen geschützt sein. Benachbarte Hydroxygruppen können durch Ketalisierung mit einem aliphatischen gesättigten $C_3$-$C_6$-Keton geschützt sein.

Es handelt sich hierbei um Reste, die durch Hydrolyse oder Hydrogenolyse leicht abspaltbar sind und während oder nach der Reaktion abgespalten werden. Falls solche Schutzgruppen bei der Verfahrensreaktion nicht abgespalten werden, dann erfolgt eine Abspaltung nach der Reaktion. Häufig enthalten die Ausgangsverbindungen aufgrund ihrer Herstellung bereits derartige Schutzgruppen.

Bei diesen Schutzgruppen handelt es sich beispielsweise um leicht solvolytisch abspaltbare Acylgruppen oder hydrierend abspaltbare Gruppen. Die solvolytisch abspaltbaren Schutzgruppen werden beispielsweise durch Verseifung mit verdünnten Säuren (zum Beispiel Essigsäure, Perchlorsäure, Salzsäure, Schwefelsäure, Ameisensäure, Trifluoressigsäure) oder mittels basischer Substanzen (Pottasche, Soda, wässrige Alkalilösungen, alkoholische Alkalilösungen, $NH_3$) bei Temperaturen zwischen -50 und 150°C, insbesondere zwischen 0 und 100°C, abgespalten. Hydrierend abspaltbare Gruppen wie Arylalkylreste (Benzylrest) oder Hydroxycarbonylreste (Carbobenzoxyrest) werden zweckmäßig durch katalytische Hydrierung in Gegenwart üblicher Hydrierungskatalysatoren (Edelmetallkatalysatoren), insbesondere Palladium-Katalysatoren oder auch Platinkatalysatoren (Platinoxyd), Raney-Nickel, in einem Lösungs- oder Suspensionsmittel, gegebenenfalls unter erhöhtem Druck, (zum Beispiel 1 - 50 bar) bei Temperaturen zwischen 20 - 150°C, insbesondere 30 - 100°C, vorzugsweise 40 - 80°C abgespalten.

Als Lösungs- beziehungsweise Suspensionsmittel für die Abspaltung solcher Schutzgruppen kommen beispielsweise in Betracht: Wasser, niedere aliphatische Alkohole, cyclische Ether wie Dioxan oder Tetrahydrofuran, aliphatische Ether, Halogenkohlenwasserstoffe, Dimethylformamid und so weiter sowie Mischungen dieser Mittel. Als Schutzgruppen, die durch Hydrogenolyse abspaltbar sind, kommen beispielsweise in Frage: Benzylrest, α-Phenyläthylrest, im Benzolkern substituierte Benzylreste (p-Brom- oder p-Nitrobenzylrest), Carbobenzoxyrest, Carbobenzthiorest, tert.-Butyloxycarbonylrest. Beispiele für hydrolytische abspaltbare Reste sind: Trifluoracetylrest, Phthalylrest, Tritylrest, p-Toluolsulfonylrest, tert.-Butyloxycarbonylrest, tert.-Butylrest, Dimethylmethylenrest und ähnliche sowie niedere Alkanoylreste wie Acetylrest, Formylrest, tert.-Butylcarboxyrest und ähnliche.

Insbesondere kommen die bei der Peptid-Synthese üblichen Schutzgruppen und die dort üblichen Abspaltungsverfahren in Frage. Unter anderem wird hierzu auch auf das Buch von Jesse P. Greenstein und Milton Winitz "Chemistry of Amino Acids", New York 1961, John Wiley and Sons, Inc. Volume 2, beispielsweise Seite 883 und folgende, verwiesen. Auch die Carbalkoxygruppe (zum Beispiel niedrigmolekulare) kommt in Frage.

Die Umsetzung von Verbindungen der Formel II mit einer Verbindung der Formel III erfolgt bei Temperaturen zwischen 0 und 200, vorzugsweise 20 und 150°C, oder auch zwischen 50 und 100°C in einem Lösungs- beziehungsweise Suspensionsmittel. Als derartige Mittel kommen in Frage: Aromatische Kohlenwasserstoffe, wie zum Beispiel Pentan, Hexan, Heptan, Benzol, Mesitylen, Toluol, Xylol; niedere aliphatische Ketone wie zum Beispiel Aceton, Methyläthylketon; halogenierte Kohlenwasserstoffe, wie zum Beispiel Chloroform, Trichlorethylen, Tetrachlorkohlenstoff, Chlorbenzol, Methylenchlorid; cyclische Ether wie zum Beispiel Tetrahydrofuran und Dioxan; niedere aliphatische nichtcyclische Ether (Diethylether, Diisopropylether); niedere aliphatische Alkohole (1 - 6 C-Atome), wie zum Beispiel Methanol, Äthanol, Isopropanol, Amylalkohol, Butanol, tert.-Butanol; Amide und N-alkylsubstituierte Amide von aliphatischen $C_1$-$C_4$-Carbonsäuren (Dimethylformamid, Dimethylacetamid); $C_1$-$C_6$-Dialkylsulfone (Dimethylsulfon, Tetramethylsulfon); $C_1$-$C_6$-Dialkyl-sulfoxide (Dimethylsulfoxid) sowie weitere aprotische Mittel wie N-Methylpyrrolidon, Tetramethylharnstoff, Hexamethylphosphorsäuretriamid, Acetonitril. Die einzelnen Alkylreste der oben angegebenen Lösungsmittel enthalten beispielsweise 1 - 6, insbesondere 1 - 4 Kohlenstoffatome. Auch Gemische dieser Mittel sowie Mischungen mit Wasser kommen als Reaktionsmedium in Frage.

Wird ein Lösungs- beziehungsweise Dispersionsmittel verwendet, arbeitet man häufig bei der Rückflußtemperatur dieses Mittels.

Dieses Verfahren wird zweckmäßig in Gegenwart von basischen Stoffen durchgeführt. Solche basischen Stoffe sind zum Beispiel: Tertiäre Amine (wie Triethylamin), Piperidin, Pyridin, Alkalicarbonate (Pottasche, Soda), Alkaliacetate, Alkali- oder Erdalkalihydroxide.

Falls eine Verbindung der Formel III umgesetzt wird, bei der $R^1$ (oder auch $R^2$, falls X $NR^2$ ist) eine Hydroxygruppe oder eine Aminogruppe an dem C-Atom enthält, das dem C-Atom, welches mit der Gruppe X verknüpft ist, benachbart ist, reagieren diese Gruppen mit dem zweiten Chloratom der Verbindung I ebenfalls unter Ringbildung. Zur Vervollständigung des Ringschlusses wird gegebenenfalls auf 60 bis 80°C erwärmt.

Die Aufspaltung dieses Ringes erfolgt durch Behandlung mit einer anorganischen oder organischen Säure, mit alkalischen Mitteln oder gegebenenfalls auch nur durch Zusatz von Wasser bei Temperaturen zwischen 10 und 100, vorzugsweise 15 und 80°C, insbesondere 30 - 60°C. Als Säuren kommen hierfür beispielsweise in Frage: Ameisensäure, Essigsäure, Trifluoressigsäure, Perchlorsäure, Mineralsäuren (Salzsäure, Schwefelsäure, Phosphorsäure).

Für diese Ringöffnung wird zweckmäßig die anfallende Reaktionsmischung verwendet. Die verwendete Säure wird zweckmäßig in verdünnter Form eingesetzt, beispielsweise werden wässrige Säuren in Konzentrationen zwischen 0,1 und 2N verwendet. Als alkalische Mittel kommen zum Beispiel in Frage: 0,1 bis 1 molare wässrige Lösungen von Natriumcarbonat, Kaliumcarbonat oder Ammoniak. Falls bei der Ringbildung Ringe entstehen, die zwei Phosphor-Sauerstoffbindungen enthalten, erfolgt die Ringaufspaltung nur mit Wasser; falls der Ring eine Phosphor-Stickstoff-Bindung und eine Phosphor-Sauerstoff-Bindung enthält, erfolgt beim Behandeln mit Säuren bevorzugt eine Aufspaltung der Phosphor-Stickstoffbindung, während bei der alkalischen Behandlung eine Aufspaltung der Phosphor-Sauerstoff-Bindung erfolgt.

In den Fällen, wo bei der Umsetzung einer Verbindung der Formel II mit einer Verbindung der Formel III zwei Chloratome der Verbindung II mit jeweils 2 Mol der Formel III reagieren (das heißt wo kein Ringschluß von funktionellen Gruppen von $R^1$ oder $R^2$ mit dem zweiten Chloratom der Phosphorsäuredichlorid gruppe eintritt), ist eine anschließende Behandlung mit Benzylalkohol oder einem $C_1$-$C_6$-Alkanol oder einem vorzugsweise einfach ungesättigten aliphatischen $C_2$-$C_6$-Alkohol (insbesondere $C_3$-$C_6$-Alkohol, wo die Doppelbindung in β-Stellung zur Hydroxygruppe steht, wie zum Beispiel Allylalkohol) erforderlich. Vorzugsweise verwendet man Methanol.

Diese Behandlung erfolgt bei Temperaturen zwischen 10 und 100°C, vorzugsweise 15 und 80°C, wobei ebenfalls im allgemeinen die anfallende Reaktionsmischung verwendet wird. Die Alkoholmenge kann beispielsweise zwischen 1 und 50 Mol liegen, bezogen auf 1 Mol der Verbindung II. Zweckmäßig wird diese Umsetzung auch in Gegenwart von basischen Stoffen, wie zum Beispiel $C_1$-$C_6$-Alkylaminen, insbesondere tertiären $C_1$-$C_6$-Alkylaminen (Triethylamin, Tripropylamin, Pyridin) durchgeführt. Bei dieser Umsetzung mit Alkoholen entstehen Verbindungen der Formel I, worin die freie Hydroxygruppe des Phosphorsäureteils durch die entsprechende Alkoxygruppe, Benzyloxygruppe beziehungsweise Alkenoxygruppe ersetzt ist. Die anschließende Abspaltung dieser Alkoholgruppen erfolgt beispielsweise mit Alkalibromiden, Alkalijodiden, niederen Alkylmagnesiumhalogeniden oder mit primären, sekundären oder tertiären Aminen, insbesondere den entsprechenden niederen Alkylaminen, wie zum Beispiel tertiären $C_1$-$C_6$-Alkylaminen (Trimethylamin). Als Alkalibromide beziehungsweise Alkalijodide kommen zum Beispiel in Frage: Lithiumbromid, Natriumbromid, Lithiumjodid, Natriumjodid. Als niedere Alkylmagnesiumhalogenide kommen zum Beispiel in Frage: Methylmagnesiumjodid, Methylmagnesiumbromid (Lösungsmittel in diesem Fall

niedere aliphatische Ether, wie Diethylether).

Diese Behandlung erfolgt bei Temperaturen zwischen 20 und 200, vorzugsweise 50 und 150°C, insbesondere 50 und 80°C, wobei man das bis dahin erhaltene Reaktionsprodukt nach Entfernung der Lösungsmittel in einem inerten Mittel auflöst. Als solche inerten Mittel kommen in Frage: Gesättigte aliphatische $C_3$-$C_8$-Ketone (Ethylmethylketon, Diethylketon, Aceton), cyclische Ether, nichtcyclische niedere aliphatische Ether (zum Beispiel Diethylether). Pro 1 Mol der eingesetzten Verbindung II werden im allgemeinen 1,5 bis 3 Mol der zuvor genannten Abspaltungsmittel vorzugsweise 2 Mol verwendet.

Die Umsetzung von erhaltenen Produkten (beispielsweise Verbindungen, bei welchen $R^1$ und/oder $R^2$ Halogenalkyl bedeuten) mit Ammoniak oder einem Amin der Formel $NR^3R^4R^5$ erfolgt bei Temperaturen zwischen 10 und 200, vorzugsweise 20 und 180°C, insbesondere 40 und 150°C mit oder ohne Lösungsmittel. Falls ein Lösungs- oder Suspensionsmittel verwendet wird, kommen hierfür in Frage: Niedere aliphatische $C_1$-$C_4$-Alkohole, Halogenkohlenwasserstoffe (Chloroform, Tetrachlorkohlenstoff) sowie die Mittel, die bereits für die Umsetzung einer Verbindung der Formel II mit der Verbindung der Formel III genannt wurden.

Diese Aminisierungsreaktion wird zweckmäßig in Gegenwart basischer Stoffe durchgeführt. Als basische Stoffe kommen beispielsweise in Frage: Alkalihydroxyde, Alkalicarbonate, tertiäre Amine.

Die Alkylierung von freien Aminogruppen in den Resten $R^1$ und/oder $R^2$ erfolgt bei Temperaturen zwischen 0 und 200, vorzugsweise zwischen 20 und 150°C, insbesondere 20 und 80°C. Diese Alkylierung erfolgt beispielsweise durch Umsetzung mit Verbindungen der Formel R'Hal, $ArSO_2OR'$ und $SO_2(OR'_3)_2$, wobei Hal ein Halogenatom (insbesondere Chlor, Brom oder Jod) und Ar ein aromatischer Rest (zum Beispiel ein gegebenenfalls durch einen oder mehrere niedere Alkylreste substituierter Phenyl- oder Naphthylrest und R' eine $C_1$-$C_6$-Alkylgruppe ist. Beispiele sind p-Toluolsulfonsäure-$C_1$-$C_6$-alkylester, $C_1$-$C_6$-Dialkylsulfate, $C_1$-$C_6$-Alkylhalogenide. Die Alkylierungsreaktion wird gegebenenfalls unter Zusatz von üblichen säurebindenen Mitteln, wie Alkalihydroxiden, Alkalicarbonaten, Alkalihydrogencarbonaten, Erdalkalicarbonaten, Alkaliacetaten, tertiären Aminen (zum Beispiel Trialkylamin wie Triethylamin), Pyridin oder auch Alkalihydriden in inerten Lösungsmitteln oder Suspensionsmitteln durchgeführt. Als Lösungs- oder Dispergiermittel kommen beispielsweise in Betracht: Aromatische Kohlenwasserstoffe wie zum Beispiel Benzol, Toluol, Xylol; aliphatische Ketone wie zum Beispiel Aceton, Methylethylketon; halogenierte Kohlenwasserstoffe wie zum Beispiel Chloroform, Tetrachlorkohlenstoff, Chlorbenzol, Methylenchlorid; aliphatische Ether wie zum Beispiel Butylether; cyclische Ether wie zum Beispiel Tetrahydrofuran, Dioxan; Sulfoxyde wie zum Beispiel Dimethylsulfoxyd; tertiäre Säureamide wie zum Beispiel Dimethylformamid, N-Methylpyrrolidon, Hexamethylphosphorsäuretriamid; aliphatische Alkohole wie Methanol, Ethanol, Isopropanol, Amylalkohol, tert.-Butanol, cycloaliphatische Kohlenwasserstoffe wie Cyclohexan und ähnliche. Auch wässrige Mischungen der genannten Lösungsmittel können verwendet werden. Häufig arbeitet man bei der Rückflußtemperatur der verwendeten Lösungs- beziehungsweise Dispergiermittel. Häufig werden die Alkylierungsreaktionskomponenten im Überschuß eingesetzt. Die Alkylierung kann auch in Gegenwart von Tetraalkylammoniumsalzen (insbesondere der Halogenide) in Kombination mit Alkalihydroxiden bei Temperaturen zwischen 0 - 100°C, vorzugsweise 20 - 80°C in einem aprotischen Lösungsmittel oder auch in Chloroform oder Methylenchlorid vorgenommen werden. Als aprotische Lösungsmittel kommen insbesondere in Betracht: tertiäre Amide (Dimethylformamid, N-Methyl-Pyrrolidon, Hexamethylphosphorsäuretriamid), Dimethylsulfoxid, Acetonitril, Dimethoxyethan, Aceton, Tetrahydrofuran.

Die erfindungsgemäßen Arzneimittel, welche als Wirkstoffe eine Verbindung der allgemeinen Formel I enthalten, besitzen eine ausgeprägte cytotoxische Wirksamkeit, die sowohl in vivo am chemisch induzierten Mamma-Karzinom der Ratte, als auch in vitro an Leukämiezellen in der Zellkultur nachgewiesen wurde. Darüberhinaus wurden in einer klinischen Pilotstudie bei Patientinnen mit Mamma-Karzinom Hautmetastasen zur vollständigen Abheilung bei topischer Anwendung gebracht.

Insbesondere für die topische Applikation, aber auch für die Zubereitung als Arzneimittel für andere Applikationsarten hat es sich als besonders günstig herausgestellt, die Verbindungen der allgemeinen Formel I zusammen mit wenigstens einem Alkylglycerin mit 3 bis 12 Kohlenstoffatomen im Alkylrest, der in Form einer Ethergruppe an eine der primären oder sekundären OH-Gruppen des Glycerins gebunden vorliegen kann, einzusetzen. Derartige Alkylglycerine können die Wirkung der Verbindungen der allgemeinen Formel I synergistisch und durch gesteigerte Penetration des Gewebes verbessern. Bevorzugt werden hierbei Alkylglycerine mit 3 bis 9 C-Atomen allein oder in Mischung verwendet. Ganz besonders bevorzugt wird eine Mischung, welche Nonylglycerin, Hexylglycerin und Propylglycerin enthält, die zweckmäßig in etwa gleichen Gewichtsmengen vorliegen, wobei die Mischung zweckmäßig noch Wasser in etwa gleicher Menge wie jeder der einzelnen Bestandteile, enthält. Eine derartige Mischung von Nonylglycerin, Hexylglycerin, Propylglycerin und Wasser im Gewichtsverhältnis 1 : 1 zu 1 : 1 wird im folgenden als "Kaskade" bezeichnet. Der Gehalt an Verbindung der allgemeinen Formel I in mg/ml Kaskade wird durch einen nachgesetzten Index bezeichnet derart, daß ein 5 mg/ml Verbindung von Formel I enthaltendes Kaskadegemisch als $Kaskade_5$, ein 200 mg Verbindung von Formel I pro ml Kaskade enthaltendes Gemisch als $Kaskade_{200}$ bezeichnet wird. Die Herstellung der Alkylglycerine ist bekannt, beispielsweise aus der DE-OS-3 343 530.8.

Zur topischen Applikation sind die erfindungsgemäßen Arzneimittel in besonderem Maße geeignet. Um Hauttumoren bzw. Hautmetastasen mit diesem Arzneimittel zu behandeln, werden die betroffenen Hautbezirke beispielsweise mit $Kaskade_5$ bis $Kaskade_{200}$ zwei- bis dreimal täglich eingerieben. Schädliche Nebenwirkungen konnten bisher nicht beobachtet werden, auch nicht bei Patienten, die über einen Zeitraum von 3 Monaten behandelt wurden. Die Remission der Hautmetastasen ist begleitet von einer Normalisierung der Haut, wie durch Gewebeschnitte eindeutig nachgewiesen werden konnte. Mehrere Patientinnen mit Hautmetastasen wurden auf diese Weise behandelt und hierbei ein vollständiges Verschwinden der Mamma-Karzinom-Hautmetastasen beobachtet.

Die topische Behandlung mit dem erfindungsgemäß bevorzugten Mittel in der Formulierung Kaskade$_5$ bis Kaskade$_{200}$ läßt sich auch für die Behandlung von inneren Tumoren bzw. Metastasen durch großflächiges Einreiben der Haut anwenden. Über die Resorption durch die Haut werden hierbei therapeutisch wirksame Blutspiegel erreicht. Ein Vorteil dieser Applikationsart liegt darin, daß die Zubereitungen Kaskade$_5$ bis Kaskade$_{200}$ von der Haut problemlos toleriert werden.

Diese bevorzugte Zubereitungsart des erfindungsgemäßen Arzneimittels in Form der Lösungen Kaskade$_5$ bis Kaskade$_{200}$ eignet sich auch gut für die Herstellung von Suppositorien für die rektale Einführung. Auch hiermit lassen sich innere Tumoren bzw. innere Metastasen gut behandeln.

Eine andere Anwendungsart des erfindungsgemäßen Arzneimittels besteht in der Instillation in präformierte Körperhöhlen. Diese Anwendungsart eignet sich besonders für Pleurakarzinosen, malignen Aszites, maligne Perikardergüsse und Blasenkarzinome. In diesem Fall werden die erfindungsgemäßen Antitumormittel der allgemeinen Formel I entweder alleine oder in Verbindung mit üblichen Träger- und Verdünnungsmitteln, insbesondere auch mit Kaskade eingesetzt werden.

Zur systemischen Applikation kommt orale oder intravenöse Verabreichung in betracht.

Für die orale Verabreichung werden die Verbindungen der allgemeinen Formel I zweckmäßig in Form einer Trinklösung angewendet. Als Träger eignen sich beispielsweise Milch, Kakao, Fruchtsaft oder Trinkwasser. Bei Ratten führten Tagesdosen von 20, 40 und 60 mg/kg Körpergewicht bei Verwendung von Hexadecylphosphocholin und Oleylphosphocholin zu einer vollständigen Remission von chemisch induzierten Mamma-Karzinomen. Hierbei erwiesen sich diese Verbindungen als besser wirksam und besser verträglich als 1-Octadecyl-2-methyl-rac-glycero-3-phospho-cholin. Bei dem für diese Versuche verwendeten Tumormodell handelt es sich um ein sogenanntes hartes Modell. Dies bedeutet, daß die an diesem Modell erstellten Befunde in den meisten Fällen auch auf die humane Situation übertragbar sind.

Für die intravenöse Verabreichung über eine intravenöse Infusionstherapie werden die erfindungsgemäßen Verbindungen der Formel I zweckmäßig in physiologischer Kochsalzlösung angewendet. Auch andere Infusionslösungen können hierbei angewendet werden.

Schließlich können mehrere Applikationsarten des erfindungsgemäßen Arzneimittels kombiniert angewendet werden, wobei die besondere topische Verträglichkeit dazu führt, daß einerseits ein Einreiben der Haut mit einer der anderen Applikationsformen kombiniert angewendet wird.

Eine weitere Trägermischung für die Verbindungen der Formel I, die sich besonders bewährt hat, besteht aus einer Mischung von etwa 4 Gew.-Teilen Wasser, 4 Gew.-Teilen Propylglycerin und je 2 Gew.-Teilen Hexylglycerin und Nonylglycerin.

Die topische Anwendung des erfindungsgemäßen Arzneimittels in der besonders bevorzugten Zubereitungsform Kaskade$_5$ bis Kaskade$_{200}$ über einen Zeitraum von mehreren Monaten zeigte, daß die lokale Toxizität sich auf ein verstärktes Abschuppen der Haut, ähnlich wie bei der lokalen Anwendung von Acetylsalicylsäure, beschränkt.

Die erfindungsgemäßen Verbindungen zeigen beispielsweise eine gute Wirkung am 7,12-Dimethylbenzanthraceninduzierten Brustdrüsenkrebs der Ratte; ebenso am Methyl-nitrosoharnstoff-induzierten Mammacarcinom der Ratte.

Beispielsweise wird bei obengenannter Versuchsmethode bei einer Dosis von 10 mg/kg Körpergewicht Ratte ein Wachstumsstillstand der Tumore, bei höheren Dosen auch ein völliges Verschwinden der Geschwülste erzielt.

Die niedrigste, bereits wirksame Dosis in dem obenangegebenen Tierversuch ist beispielsweise

5 mg/kg oral
5 mg/kg intravenös.

Als allgemeiner Dosisbereich für die Wirkung (Tierversuch wie oben) kommt beispielsweise in Frage:

5 - 50 mg/kg oral, insbesondere 15 - 32 mg/kg
5 - 50 mg/kg intravenös, insbesondere 15 - 32 mg/kg.

Die Wirkungsrichtung der erfindungsgemäßen Verbindungen ist mit der Wirkung des bekannten Arzneimittelwirkstoffs TAMOXIFEN vergleichbar, jedoch bestehen hierzu insbesondere folgende Unterschiede: Die Wirkung ist stärker und von längerer Dauer als die von TAMOXIFEN.

Indikationen, für die die erfindungsgemäßen Verbindungen in Betracht kommen können: Brustdrüsenkrebs and andere menschliche Krebsarten.

Die pharmazeutischen Zubereitungen enthalten im allgemeinen zwischen 5 - 2000 mg, beispielsweise 10 - 400 mg der erfindungsgemäßen aktiven Komponenten.

Die Verabreichung kann beispielsweise in Form von Tabletten, Kapseln, Pillen, Dragees, Zäpfchen, Salben, Gelees, Cremes, Puder, Stäubepulver, Aerosolen oder in flüssiger Form erfolgen. Als flüssige Anwendungsformen kommen zum Beispiel in Frage: Ölige oder alkoholische beziehungsweise wässrige Lösungen sowie Suspensionen und Emulsionen. Bevorzugte Anwendungsformen sind Tabletten, die zwischen 40 und 400 mg oder Lösungen, die zwischen 0,1 % bis 5 % an aktiver Substanz enthalten.

Die Einzeldosis der erfindungsgemäßen aktiven Komponenten kann beispielsweise liegen

a) bei oralen Arzneiformen zwischen 5 - 100 mg/kg Körpergewicht, vorzugsweise 15 - 50 mg/kg Körpergewicht,

b) bei parenteralen Arzneiformen (zum Beispiel intravenös, intramuskulär) zwischen 5 - 100 mg/kg Körpergewicht,

- (Die Dosen sind jeweils bezogen auf die freie Base)-

c) bei Arzneiformen zur lokalen Applikation auf die Haut und Schleimhäute (zum Beispiel in Form von Lösungen, Lotionen, Emulsionen, Salben und so weiter) zwischen 50 - 2000 mg, vorzugsweise 80 - 1500 mg.

Beispielsweise können 3 mal täglich 1 Tablette mit einem Gehalt von 40 - 400 mg wirksamer Substanz oder zum Beispiel bei intravenöser Injektion 1 - 5 mal täglich eine Ampulle von 1 - 5 ml Inhalt mit 50 - 250 mg Substanz empfohlen werden. Bei oraler Verabreichung ist die minimale tägliche Dosis beispielsweise 120 mg; die maximale tägliche Dosis bei oraler Verabreichung soll nicht über 100 mg/kg Körpergewicht liegen.

Die akute Toxizität der erfindungsgemäßen Verbindungen an der Maus (ausgedrückt durch die LD 50 mg/kg; Methode nach Miller und Tainter: Proc. Soc. Exper. Biol. a. Med. 57 (1944) 261) liegt beispielsweise bei oraler Applikation zwischen 200 und 450 mg/kg Körpergewicht.

Die Arzneimittel können in der Humanmedizin, der Veterinärmedizin sowie in der Landwirtschaft allein oder im Gemisch mit anderen pharmakologisch aktiven Stoffen verwendet werden.

- (Die Dosen sind jeweils bezogen auf die freie Base)-

Die Erfindung stellt somit neue Verbindungen und ein neues Arzneimittel zur Behandlung von Tumoren zur Verfügung und liefert hierbei nicht nur überhaupt ein weiteres Antitumormittel, sondern bringt erstmals ein auch bei topischer Anwendung im klinischen Versuch nachgewiesenermaßen wirksames Mittel. Hierdurch werden für die Behandlung von Tumorpatienten neue Möglichkeiten eröffnet.

Die Erfindung wird durch die folgenden Beispiele erläutert.

**Beispiel 1**

1-Hexadecyl-propandiol-(1,2)-phosphoethanolamin (Phosphorylierung mit Phosphoroxychlorid, Ringschluß des Phosphorsäuredichlorids mit Ethanolamin und Ringöffnung)

1-Hexadecyl-propandiol-(1,2) (1 Mol) und Triethylamin (1,8 Mol) werden in 1,5 l Tetrahydrofuran (THF) gelöst und tropfenweise unter Rühren zu einer Lösung von Phosphoroxychlorid (1,2 Mol) in 120 ml THF so zugegeben, daß die Temperatur 25°C nicht übersteigt (Kühlen mit Eisbad). Die Reaktion ist 30 Minuten nach dem Eintropfen und Einhalten einer Temperatur von 25°C abgeschlossen (Nachweis über DSC in Ether: Rf-Werte von 0,9 für das Ausgangsprodukt und von 0,0 für das Reaktionsprodukt nach Hydrolyse mit Wasser. Man entfernt das Eisbad und tropft in das Reaktionsgemisch unter starkem Rühren eine Lösung von Ethanolamin (1,5 Mol) und Triethylamin (1,8 Mol) so ein, daß die Temperatur im Reaktionsgefäß auf 65 bis 70°C steigt. Dann ist die Ringbildung abgeschlossen (Nachweis durch DSC in Ether: Rf-Wert von 0,2). Man filtriert vom ausgefallenen Triethylaminhydrochlorid ab und versetzt das Filtrat bei 40 bis 50°C mit 1,5 l 2N Ameisensäure. Nach 15 Minuten ist die Ringöffnung abgeschlossen (Nachweis über DSC in Ether: Rf-Wert 0,0; Rf-Wert in Chloroform/Methanol/Essigsäure/Wasser 100 : 60 : 20 : 5, per Vol., 0,8). Man kühlt auf -20°C und saugt das Produkt ab, das meist rein anfällt. Die Ausbeute an 1-Hexadecyl-propandiol-(1,2)-phosphoethanolamin beträgt 90 % bezogen auf den Ausgangsalkohol.

**Analysendaten:**

1-Hexadecyl-propandiol-(1,2)-phosphoethanolamin (MG 423,6)

| | |
|---|---|
| ber./gef. (%): | C, 59,55/59,43 |
| | H, 10,95/10,86 |
| | N, 3,31/3,26 |
| | P, 7,31/7,21 |

1-Oleyl-propandiol-(1,2)-phosphoethanolamin (MG 449,6)

| | |
|---|---|
| ber./gef. (%): | C, 61,44/61,29 |
| | H, 10,76/10,62 |
| | N, 3,12/3,03 |
| | P, 6,89/6,59 |

Außerdem wurden analog folgende Verbindungen dargestellt:

1-Tetradecyl-propandiol-(1,2)-phosphocholin
1-Octadecyl-propandiol-(1,2)-phosphocholin
1-Eicosyl-propandiol-(1,2)-phosphocholin
1-cis-11-Hexadecenyl-propandiol-(1,2)-phosphocholin

**Beispiel 2**

1-Hexadecyl-propandiol-(1,2)-phosphocholin, + 1$H_2O$ (Methylierung von 1)

Die Kristalle aus Beispiel 1 (1 Mol) werden in 1,2 l 2-Propanol und 0,4 l Dichlormethan aufgenommen. Man versetzt die entstehende Suspension unter starkem Rühren mit Kaliumkarbonat (4 Mol) in 1 l Wasser. Das zweiphasige Reaktionsgemisch wird mit Dimethylsulfat (4 Mol) tropfenweise und unter Rühren so versetzt, daß die Temperatur 40°C nicht übersteigt. Die Reaktion ist 60 minuten nach dem Eintropfen beendet (Nachweis durch DSC in Chloroform/Methanol/25-%-igem Ammoniak 50 : 50 : 5, per Vol.: Rf-Wert 0,3). Nach Phasenseparation bei 20°C enthält die obere Phase das Produkt. Man entfernt das Lösungsmittel unter Vakuum und chromatographiert den viskosen Rückstand an Kieselgel (Merck Art. 7733, Kieselgel 60, Korngröße 0,2 bis 0,5 mm).

**Chromatographie**

Kieselgel, 2 kg, werden mit Chloroform/Methanol/25-%-igem Ammoniak (200/15/1 per Vol.) versetzt und in eine Chromatographiesäule gefüllt. Man löst das viskose Öl in 800 ml des obigen Lösungsmittelgemisches und gibt das Rohprodukt auf die Säule (unlösliche Anteile werden vorher abfiltriert). Man eluiert mit Fließmitteln steigender Polarität bis die Verunreinigungen ausgewaschen sind. Das Produkt wird schließlich mit Chloroform/Methanol/25-%-igem Ammoniak (50/50/5 per Vol.) eluiert. Die vereinigten Eluate werden einrotiert und mit Toluol das restliche Wasser entfernt. Der Rückstand wird in 600 ml Dichlormethan aufgenommen und mit 4 l Aceton versetzt. Die bei -20°C abgeschiedenen Kristalle werden mit kaltem Aceton gewaschen, dann mit Pentan und im Vakuum getrocknet.

**Analysendaten:**

1-Hexadecyl-propandiol-(1,2)-phosphocholin (MG 483,7)

| | |
|---|---|
| ber./gef. (%): | C, 59,60/59,47 |
| | H, 11,25/11,18 |
| | N, 2,90/2,73 |
| | P, 6,40/6,31 |

1-Oleyl-propandiol-(1,2)-phosphocholin, + $H_2O$ (MG 509,7)

| | |
|---|---|
| ber./gef. (%): | C, 61,27/61,18 |
| | H, 11,07/11,03 |
| | N, 2,75/2,65 |
| | P, 6,08/6,05 |

Entsprechende Verbindungen wurden als Tetradecyl-, Octadecyl- und Eicosylderivate erhalten.

**Beispiel 3**

1-Hexadecyl-propandiol-(1,2)-phospho-(N-methyl)-ethanolamin (Phosphorylierung mit Phosphoroxychlorid, 2. Phosphorylierung mit dem gebildeten Phosphorsäuredichlorid, Methanolyse, LiBr-Spaltung, Aminierung)

Die 1. Phosphorylierung erfolgt wie in Beispiel 1 beschrieben. Das Reaktionsgemisch, etwa 1 Mol 1-Hexadecyl-propandiol-(1,2)-phorphorsäuredichlorid, wird direkt unter tropfenweiser Zugabe von Bromethanol, (1,5 Mol) und Triethylamin (1,8 Mol) in 1,5 l THF weiter umgesetzt. Die Temperatur wird unter stetem Rühren auf 30°C erhöht. Nach zwei Stunden bei 30°C ist die Reaktion abgeschlossen. Zur Methanolyse wird das Reaktionsgemisch mit Methanol (10 Mol) versetzt und nach 30 Minuten aufgearbeitet. Dazu versetzt man mit 1,5 l Hexan und 1,5 l Wasser, schüttelt gut durch und trennt nach Phasenseparation die obere Hexanphase ab. Man entfernt das Lösungsmittel im Vakuum und versetzt den öligen Rückstand mit einer Lösung aus 2 Mol LiBr in 1,5 l Ethylmethylketon. Man kocht 30 Minuten unter Rückfluß, dann ist die Demethylierung abgeschlossen.

Man entfernt das Lösungsmittel und versetzt den Rückstand mit einem Gemisch aus jeweils 1 l Methanol/Wasser/Chloroform, schüttelt gut durch und verwendet die untere Chloroformphase, die das Produkt enthält. Man entfernt das Lösungsmittel, versetzt mit 500 ml Chloroform und dann mit 500 ml Ethanol, das 1 Mol Methylamin enthält. Man erwärmt auf 50°C, verschließt mit einem Schliffstopfen und arbeitet das Reaktionsgemisch nach 24 Stunden auf. Zunächst wird das Lösungsmittel im Vakuum entfernt und der Rückstand mit einem Gemisch von jeweils 1 l Chloroform/Methanol/Wasser gut geschüttelt. Nach Phasenseparation wird die untere Chloroformphase abgenommen und im Vakuum vom Lösungsmittel befreit. Die Reinigung des Produktes erfolgt durch Chromatographie (siehe Beispiel 2).

**Analysendaten:**

1-Hexadecyl-propandiol-(1,2)-(N-methyl)-ethanolamin (MG 437,6)

| | |
|---|---|
| ber./gef. (%): | C, 60,39/60,34 |
| | H, 11,06/10,93 |
| | N, 3,20/3,14 |
| | P, 7,08/7,00 |

Nach diesem Verfahren wurden auch die Tetradecyl-, Octadecyl-, Oleyl- und Eicosyl-Derivate dargestellt.

**Beispiel 4**

1-Hexadecyl-propandiol-(1,2)-phospho-(N,N-dimethyl)-ethanolamin (Phosphorylierung mit Phosphoroxychlorid, 2. Phosphorylierung mit dem gebildeten Phosphorsäuredichlorid, Methanolyse, LiBr-Spaltung, Aminierung).

Die Reaktionsfolge, Aufarbeitung und Reinigung ist wie für Beispiel 3 beschrieben. Allerdings erfolgt die Aminierung in Gegenwart von 2 Mol Diethylamin.

**Analysendaten:**

1-Hexadecyl-propandiol-(1,2)-(N,N-dimethyl)-ethanolamin (MG 451,6)

| | |
|---|---|
| ber./gef. (%): | C, 61,17/61,09 |
| | H, 11,16/11,04 |
| | N, 3,10/3,02 |
| | P, 6,86/6,75 |

Nach diesem Verfahren wurden auch die Tetradecyl-, Octadecyl-, Oleyl- und Eicosyl-Derivate dargestellt.

**Beispiel 5**

1-Hexadecyl-propandiol-(1,2)-phospho-(N,N,N-trimethyl)-alkanolamin + 1 $H_2O$

Die Reaktionsfolge, Aufarbeitung und Reinigung ist wie für Beispiel 3 beschrieben. Allerdings werden im zweiten Phosphorylierungsschritt anstelle von Bromethanol die entsprechenden Bromalkanole eingesetzt, also Brombutanol, Bromhexanol oder Bromoctanol, um die gewünschten Strukturen mit verändertem Phosphor-Stickstoffabstand im Aminierungsschritt zu erhalten. Im Aminierungsschritt wird bei der Synthese der Trimethylammoniumverbindungen die Reaktion in Gegenwart von 2 Mol Trimethylamin durchgeführt. Zur Herstellung der Alkanolamine wird dem Gemisch aus jeweils 500 ml Chloroform/Ethanol, eine Lösung von 25-%-igem Ammoniak (150 ml) zugesetzt. Es wird wie in Beispiel 3 besprochen aufgearbeitet und gereinigt.

**Analysendaten:**

1-Hexadecyl-propandiol-(1,2)-phospho-(N,N,N-trimethyl)-butanolamin + 1$H_2O$ (MG 511,7)

| | |
|---|---|
| ber./gef. (%): | C, 61,03/60,87 |
| | H, 11,42/11,29 |
| | N, 2,74/2,69 |
| | P, 6,05/5,94 |

1-Hexadecyl-propandiol-(1,2)-phospho-(N,N,N-trimethyl)-hexanolamin + 1 $H_2O$ (MG 539,8)

ber./gef. (%): C, 62,31/62,24
H, 11,58/11,49
N, 2,58/2,42
P, 5,74/5,59

1-Hexadecyl-propandiol-(1,2)-phospho-(N,N,N-trimethyl)-octanolamin + 1$H_2O$

ber./gef. (%): C, 61,17/61,05
H, 11,16/11,09
N, 3,10/3,03
P, 6,86/6,79

1-Oleyl-propandiol-(1,2)-phosphobutanolamin (MG 477,7)

ber./gef. (%): C, 62,86/62,79
H, 10,97/10,84
N, 2,93/2,89
P, 6,48/6,29

1-Oleyl-propandiol-(1,2)-phosphohexanolamin (MG 505,7)

ber./gef. (%): C, 64,13/64,05
H, 11,16/11,03
N, 2,77/2,71
P, 6,12/6,02

1-Oleyl-propandiol-(1,2)-phosphooctanolamin (MG 533,8)

ber./gef. (%): C, 65,26/65,19
H, 11,33/11,21
N, 2,62/2,59
P, 5,80/5,73

1-Oleyl-propandiol-(1,2)-phospho-(N,N,N-trimethyl)-butanolamin + 1$H_2O$ (MG 537,8)

ber./gef. (%): C, 62,54/62,42
H, 11,25/11,21
N, 2,61/2,53
P, 5,76/5,69

1-Oleyl-propandiol-(1,2)-phospho-(N,N,N-trimethyl)-hexanolamin + 1$H_2O$ (MG 565,8)

ber./gef. (%): C, 63,68/63,52
H, 11,40/11,37
N, 2,48/2,35
P, 5,47/5,33

1-Oleyl-propandiol-(1,2)-phospho-(N,N,N-trimethyl)-octanolamin + 1$H_2O$

ber./gef. (%): C, 64,72/64,63
H, 11,54/11,49
N, 2,36/2,29
P, 5,22/5,14

Nach diesem Verfahren wurden auch die Tetradecyl-, Octadecyl- und Eicosyl-Derivate dargestellt.

**Beispiel 6**

1-Oleyl-propandiol-(1,2)-phosphoglycerin, Natriumsalz + 1$H_2O$
(Phosphorylierung mit Phosphoroxychlorid, Phosphorylierung mit dem gebildeten Phosphorsäuredichlorid, Methanolyse, LiBr-Spaltung, Hydrolyse in 70-%-iger Essigsäure)

Die Reaktionsfolge ist wie in Beispiel 3 beschrieben bis einschließlich des Demethylierungsschrittes. Der Rückstand aus dem Demethylierungsschritt wird in 2 l 70-%-iger Essigsäure aufgenommen und auf 60°C erwärmt. Das entstehende Aceton wird unter leichtem Vakuum entfernt. Die Reaktion ist nach 2 Stunden abgeschlossen.

Man versetzt mit 2 l Wasser und 2 l Chloroform und schüttelt gut durch. Die Chloroformphase wird mit 2 l 0,5 M Natriumcarbonatlösung behandelt und nach Phasenseparation abgetrennt. Man entfernt das Lösungsmittel und chromatographiert an Kieselgel.

**Analysendaten:**

1-Oleyl-propandiol-(1,2)-phosphoglycerin, Natriumsalz + 1$H_2O$ (MG 520,6)

| | |
|---|---|
| ber./gef. (%): | C, 55,37/55,22 |
| | H, 9,68/9,57 |
| | P, 5,95/5,89 |

Analog wurden außerdem die Tetradecyl-, Hexadecyl-, Octadecyl- und Eicosyl-Derivate dargestellt.

**Beispiel 7**

1-Oleyl-propandiol-(1,2)-phosphoglykolester, Natriumsalz + 1$H_2O$ (Phosphorylierung, Ringschluß, Ringöffnung)

Die Phosphorylierung erfolgt, wie unter Beispiel 1 beschrieben. Das Reaktionsgemisch, etwa 1 Mol 1-Oleyl-propandiol-(1,2)-phosphorsäuredichlorid, wird direkt unter tropfenweiser Zugabe von Ethylenglykol (1,5 Mol) und Triethylamin (1,8 Mol) in 1,5 l THF weiter umgesetzt. Die Temperatur wird zur Vervollständigung der Ringbildung auf 60°C erhöht. Nach zwei Stunden bei dieser Temperatur ist die Reaktion abgeschlossen. Man filtriert das ausgefallene Triethylaminhydrochlorid über eine Porzellanfritte ab und versetzt das Filtrat unter starkem Rühren bei 20°C mit 1,5 l Wasser. Nach zwei Stunden ist die Hydrolyse beendet. Man entfernt das Lösungsmittel von der oberen THF-Phase durch Einrotieren im Vakuum. Der Rückstand wird mit einem Gemisch aus jeweils 1 l Chloroform/Methanol/halbgesättigter NaCl-Lösung versetzt, gut geschüttelt und Phasenseparation abgewartet. Die untere Chloroformphase enthält das Produkt, wird im Vakuum vom Lösungsmittel befreit und der Rückstand durch Chromatographie an Kieselgel gereinigt.

**Analysendaten:**

1-Oleyl-propandiol-(1,2)-phosphoglykol, Natriumsalz + 1$H_2O$ (MG 490,6)

| | |
|---|---|
| ber./gef. (%): | C, 56,31/56,26 |
| | H, 9,86/9,79 |
| | P, 6,28/6,23 |

Entsprechend wurden die Tetradecyl-, Hexadecyl-, Octadecyl- und Eicosyl-Derivate dargestellt.

**Beispiel 8**

1-Oleyl-propandiol-(1,2)-phosphomethyl, Natriumsalz + 1$H_2O$ (Phosphorylierung, Methanolyse und LiBr-Spaltung)

Der Phosphorylierungsschritt erfolgt wie unter Beispiel 1 beschrieben. Zur Methanolyse wird das Reaktionsgemisch, ca. 1 Mol, mit Methanol (10 Mol) und Triethylamin (1,8 Mol) bei 20°C versetzt. Die Methanolyse ist nach 30 Minuten abgeschlossen. Man versetzt mit 1,5 l Hexan und 1,5 l Wasser, schüttelt gut durch und befreit die obere Hexanphase vom Lösungsmittel. Der ölige Rückstand wird mit LiBr (2 Mol) in 1,5 l Ethylmethylketon unter Rückfluß gekocht. Die Demethylierung ist nach einer Stunde vollständig. Man entfernt das Lösungsmittel, nimmt in einem Gemisch aus jeweils 1 l Chloroform/Methanol/Wasser auf, schüttelt gut durch und behandelt die untere Chloroformphase mit 1 l gesättigter NaCl-Lösung zur Umwandlung in das Natriumsalz. Die untere Chloroformphase wird einrotiert und das Produkt durch Chromatographie an Kieselgel gereinigt.

**Analysendaten:**

1-Oleyl-propandiol-(1,2)-phosphomethyl, Natriumsalz + 1$H_2O$ (MG 460,6)

| | |
|---|---|
| ber./gef. (%): | C, 57,38/57,25 |
| | H, 10,07/9,94 |
| | P, 6,69/6,43 |

Entsprechend wurden die Tetradecyl-, Hexadecyl-, Octadecyl- und Eicosyl-Derivate dargestellt.

**Beispiel 9**

1-Oleyl-propandiol-(1,2)-phosphopentyl, Natriumsalz + $1H_2O$ (Phosphorylierung, 2. Phosphorylierung mit dem gebildeten Phosphorsäuredichlorid, Methanolyse, LiBr-Spaltung)

Es wird wie in Beispiel 3 beschrieben verfahren. Allerdings erfolgt die zweite Phosphorylierung mit Pentylalkohol anstelle von Bromethanol. Das Produkt der Demethylierung mit LiBr wird zum Austausch $Li^+$ gegen $Na^+$ in einem Gemisch aus jeweils 1 l Chloroform/Methanol/halbgesättigte NaCl-Lösung aufgenommen, kräftig geschüttelt und die untere Chloroform-Phase einrotiert. Der Rückstand wird an Kieselgel chromatographiert.

**Analysendaten:**

1-Oleyl-propandiol-(1,2)-phosphopentyl, Natriumsalz + $1H_2O$ (MG 516,7)

| | |
|---|---|
| ber./gef. (%): | C, 60,44/60,13 |
| | H, 10,53/10,39 |
| | P, 5,99/5,87 |

Analoge Verbindungen wurden als Tetradecyl-, Hexadecyl-, Octadecyl- und Eicosylderivate dargestellt.

**Beispiel 10**

1-Oleyl-propandiol-(1,2)-phosphoserin, Natriumsalz (Phosphorylierung, 2. Phosphorylierung mit dem gebildeten Phosphorsäuredichlorid, Methanolyse, LiBr-Spaltung, saure Hydrolyse)

Die ersten vier Reaktionsschritte werden wie unter Beispiel 3 beschrieben durchgeführt. Allerdings wird im 2. Phosphorylierungsschritt N-tert.-Butyloxycarbonylserin-tert.-butylester anstelle von Bromethanol verwendet. Die saure Hydrolyse der Serinschutzgruppen erfolgt in einem Gemisch aus 2 l Methylenchlorid, 1 l Trifluoressigsäure und 500 ml 70-%-iger Perchlorsäure in einem Eisbad bei Temperaturen unter 10°C. Nach 30 Minuten versetzt man mit 4 l Wasser, 2 l Chloroform und 4 l Methanol. Man schüttelt gut durch und trennt die untere Chloroformphase ab. Zur Neutralisation schüttelt man die Chloroformphase noch mit 2 l 0,5 M $Na_2CO_3$-Lösung aus. Die Chloroformphase wird einrotiert und das Produkt an Kieselgel chromatographiert.

**Analysendaten:**

1-Oleyl-propandiol-(1,2)-phosphoserin, Natriumsalz (MG 515,6)

| | |
|---|---|
| ber./gef. (%): | C, 55,91/55,73 |
| | H, 9,19/9,08 |
| | N, 6,01/5,92 |
| | P, 2,72/2,51 |

Analoge Verbindungen wurden als Tetradecyl-, Hexadecyl-, Octadecyl- und Eicosylderivate erhalten.

**Patentansprüche**

1. Verbindungen der allgemeinen Formel

$CH_2 - O - R$
|
$CH - O - PO^{\theta}_2 - X - R_1$ I
|
$(CH_2)_n$
|
$CH_3$

in der
R einen gesättigten oder ungesättigten Kohlenwasserstoffrest mit 12 bis 24 C-Atomen bedeutet, der auch halogensub-

stituiert sein kann,
X ein Sauerstoffatom, NH oder $NR_2$ ist,
n eine ganze Zahl von 0 bis 10 bedeutet,
$R_1$ eine $C_1$-$C_8$-Alkylgruppe ist oder worin $R_1$ eine $C_2$-$C_8$-Alkylgruppe darstellt, die ungesättigt und/oder mit Halogen, Amino, $C_1$-$C_6$-Alkylamino, Di-$C_1$-$C_6$-alkylamino, Tri-$C_1$-$C_6$-alkylamino, Hydroxy, Carboxy, $C_3$-$C_8$-Cycloalkyl oder Phenyl substituiert ist, und worin $R_1$ außerdem auch 2-tert.-Butyloxycarbonyl-aminoethyl, 2-tert.-butyloxycarbonylethyl, 2,3-Isopropyl-idendioxy-propyl-(1), 2,3-Dibenzyloxy-propyl-(1), 1,3-Dibenzyloxy-propyl-(2) oder N-$C_1$-$C_6$-Alkylamino-$C_2$-$C_6$-alkyl bedeuten kann, wenn X ein Sauerstoffatom ist, und worin außerdem auch 2,3-Dihydroxypropyl-(1) bedeuten kann, wenn X die NH-Gruppe ist,
und $R_2$ eine 2,3-Dihydroxypropyl-(1)-gruppe, eine $C_1$-$C_8$-Alkylgruppe oder eine $C_2$-$C_8$-Alkylgruppe, die ungesättigt und/oder mit Halogen, Amino, $C_1$-$C_6$-Alkylamino, Di-$C_1$-$C_6$-alkylamino, Tri-$C_1$-$C_6$-alkylamino, Hydroxy, Carboxy, $C_3$-$C_8$-Cycloalkyl oder Phenyl substituiert ist, darstellt,
und deren physiologisch verträgliche Salze.

2. Verbindung nach Anspruch 1, *dadurch gekennzeichnet*, daß R ein Alkyl- oder Alkenylrest mit 14 bis 20 C-Atomen, X = O und $R_1$ = Trialkylammoniumethyl mit 1 bis 3 C-Atomen je Alkylgruppe ist.

3. 1-Hexadecyl-propandiol-(1,2)-phosphocholin.

4. 1-Oleyl-propandiol-(1,2)-phosphocholin.

5. 1-Hexadecyl-propandiol-(1,2)-phospho-(N,N,N-trimethyl)-propanolamin.

6. 1-Oleyl-propandiol-(1,2)-phospho-(N,N,N-trimethyl) -propanolamin.

7. 1-Oleyl-propandiol-(1,2)-phospho-(N,N,N-trimethyl)butanolamin.

8. 1-Hexadecyl-propandiol-(1,2)-phospho-(N,N,N-trimethyl)-butanolamin.

9. 1-Oleyl-propandiol-(1,2)-phospho-(N,N,N-trimethyl)-pentanolamin.

10. 1-Hexadecyl-propandiol-(1,2)-phospho-(N,N,N-trimethyl)-pentanolamin.

11. Arzneimittel, *dadurch gekennzeichnet*, daß es wenigstens eine Verbindung der allgemeinen Formel I von Anspruch 1 als Wirkstoff, gegebenenfalls zusammen mit üblichen pharmazeutischen Zusatz- und Verdünnungsmitteln enthält.

12. Arzneimittel nach Anspruch 11, *dadurch gekennzeichnet*, daß es außer der Verbindung von Formel I wenigstens ein Alkylglycerin der allgemeinen Formel II

$$\begin{array}{l} H_2C - O - R_6 \\ \;\;| \\ \;HC - O - R_7 \\ \;\;| \\ H_2C - OH \end{array}$$

in der einer der Reste $R_6$ und $R_7$ eine Alkylgruppe mit 3 bis 12 C-Atomen und der andere Rest ein H-Atom bedeutet, enthält.

13. Mittel nach Anspruch 11 oder 12, *dadurch gekennzeichnet*, daß es zur topischen Behandlung von Hauttumoren 5 bis 200 mg Verbindung gemäß Formel I pro ml Alkylglycerin enthält.

14. Mittel nach Anspruch 13, *dadurch gekennzeichnet*, daß es gleiche Gewichtsteile Nonylglycerin, Hexylglycerin, Propylglycerin und Wasser enthält.

15. Mittel nach einem der Ansprüche 11 oder 12, *dadurch gekennzeichnet*, daß es zur oralen Behandlung von Tumoren als Trinklösung formuliert wird mit einer Tagesdosis zwischen 5 und 100 mg/kg Körpergewicht.

16. Mittel nach einem der Ansprüche 11 oder 12, *dadurch gekennzeichnet*, daß es zur intravenösen Behandlung von Tumoren eine Verbindung gemäß allgemeiner Formel I in einer Menge von 5 bis 100 mg/kg Körpergewicht in physiologischer Kochsalzlösung enthält.

17. Verfahren zur Herstellung von Verbindungen der Formel

$CH_2 - O - R$
|
$CH - O - PO^{\theta}_2 - X - R_1$ I
|
$(CH_2)_n$
|
$CH_3$

in der
R einen gesättigten oder ungesättigten Kohlenwasserstoffrest mit 12 bis 24 C-Atomen bedeutet, der auch halogensubstituiert sein kann,
X ein Sauerstoffatom, NH oder $NR_2$ ist,
n eine ganze Zahl von 0 bis 10 bedeutet,
$R_1$ eine $C_1$-$C_8$-Alkylgruppe ist oder worin $R_1$ eine $C_2$-$C_8$-Alkylgruppe darstellt, die ungesättigt und/oder mit Halogen, Amino, $C_1$-$C_6$-Alkylamino, Di-$C_1$-$C_6$-alkylamino, Tri-$C_1$-$C_6$-alkylamino, Hydroxy, Carboxy, $C_3$-$C_8$-Cycloalkyl oder Phenyl substituiert ist, und worin $R_1$ außerdem auch 2-tert.-Butyloxycarbonyl-aminoethyl, 2-tert.-butyloxycarbonylethyl, 2,3-Isopropyl-idendioxy-propyl-(1), 2,3-Dibenzyloxy-propyl-(1), 1,3-Dibenzyloxy-propyl-(2) oder N-$C_1$-$C_6$-Alkylamino-$C_2$-$C_6$-alkyl bedeuten kann, wenn X ein Sauerstoffatom ist, und worin $R_1$ außerdem auch 2,3-Dihydroxypropyl-(1) bedeuten kann, wenn X die NH-Gruppe ist, und $R_2$ eine 2,3-Dihydroxypropyl-(1)-gruppe, eine $C_1$-$C_8$-Alkylgruppe oder eine $C_2$-$C_8$-Alkylgruppe, die ungesättigt und/oder mit Halogen, Amino, $C_1$-$C_6$-Alkylamino, Di-$C_1$-$C_6$-alkylamino, Tri-$C_1$-$C_6$-alkylamino, Hydroxy, Carboxy, $C_3$-$C_8$-Cycloalkyl oder Phenyl substituiert ist, darstellt, und deren physiologisch verträglichen Salzen, dadurch gekennzeichnet, daß man eine Verbindung der Formel II

$CH_2 - O - R$
|
$CH - OPOCl_2$
|
$(CH_2)_n$
|
$CH_3$

worin R und n die angegebenen Bedeutungen haben, mit einer Verbindung der Formel III

$HX - R_1$

worin X und $R_1$ die angegebenen Bedeutungen haben, vorhandene Hydroxygruppen, Carboxygruppen, Aminogruppen oder $C_1$-$C_6$-Alkylaminogruppen auch eine übliche Schutzgruppe enthalten können, beziehungsweise 2 benachbarte Hydroxygruppen auch durch ein aliphatisches $C_3$-$C_6$-Keton acetalisiert sein können, in einem inerten Lösungsmittel umsetzt, wobei für den Fall, daß $R_1$ eine freie Hydroxygruppe oder eine freie Aminogruppe an dem C-Atom enthält, das dem C-Atom, welches mit der Gruppe X verknüpft ist, benachbart ist, die erhaltene Reaktionsmischung beziehungsweise das erhaltene Reaktionsprodukt zum vollständigen Ringschluß gegebenenfalls auf 60 bis 80°C erwärmt und anschließend gegebenenfalls in einem inerten Mittel mit Wasser, einer anorganischen oder organischen Säure oder mit alkalischen Mitteln behandelt, in den übrigen Fällen die erhaltene Reaktionsmischung beziehungsweise das erhaltene Reaktionsprodukt mit Benzylalkohol, einem $C_1$-$C_6$-Alkanol oder einem ungesättigten $C_2$-$C_6$-Alkohol umsetzt und anschließend das so erhaltene Reaktionsprodukt mit Alkalibromiden, Alkalijodiden, niederen Alkylmagnesiumhalogeniden oder Aminen behandelt, gegebenenfalls in den erhaltenen Verbindungen vorhandene Schutzgruppen abspaltet, gegebenenfalls erhaltene Reaktionsprodukte, bei denen $R_1$ ein Halogenatom enthält, mit Ammoniak oder einem Amin der Formel $NR_3R_4R_5$ umsetzt, wobei die Reste $R_3$, $R_4$ und $R_5$ gleich oder verschieden sind und Wasserstoff oder $C_1$-$C_6$-Alkyl bedeuten, und/oder in erhaltenen Produkten mit einer Aminogruppe diese Aminogruppe durch $C_1$-$C_6$-Alkylgruppen alkyliert, und gegebenenfalls die erhaltenen Produkte in die Salze überführt.

**Claims**

1. Compounds of the general formula

$CH_2 - O - R$
|
$CH - O - PO^{\theta}_2 - X - R_1$
| I
$(CH_2)_n$
|
$CH_3$

in which R signifies a saturated or unsaturated hydrocarbon radical with 12 to 24 C-atoms, which can also be halogen-

substituted, X is an oxygen atom, NH or $NR_2$, n signifies a whole number from 0 to 10, $R_1$ is a $C_1$-$C_8$-alkyl group or wherein $R_1$ represents a $C_2$-$C_8$-alkyl group which is unsaturated and/or substituted with halogen, amino, $C_1$-$C_6$-alkylamino, di-$C_1$-$C_6$-alkylamino, tri-$C_1$-$C_6$-alkylamino, hydroxyl, carboxyl, $C_3$-$C_8$-cyclo-alkyl or phenyl, and wherein $R_1$ can also signify 2-tert.-butyloxycarbonylaminoethyl, 2-tert.-butyloxycarbonyl-ethyl, 2,3-isopropylidene-dioxypropyl-(1), 2,3-dibenzyloxypropyl-(1), 1,3-dibenzyloxypropyl-(2) or N-$C_1$-$C_6$-alkylamino-$C_2$-$C_6$-alkyl when X is an oxygen atom and wherein $R_1$ can also signify 2,3-dihydroxypropyl-(1) when X is the NH group, and $R_2$ represents a 2,3-dihydroxypropyl-(1) group, a $C_1$-$C_8$-alkyl group or a $C_2$-$C_8$-alkyl group which is unsaturated and/or substituted with halogen, amino, $C_1$-$C_6$-alkylamino, di-$C_1$-$C_6$-alkylamino, tri-$C_1$-$C_6$-alkylamino, hydroxyl, carboxyl, $C_3$-$C_8$-cycloalkyl or phenyl, and their physiologically compatible salts.

2. Compounds according to claim 1, characterised in that R is an alkyl or alkenyl radical with 14 to 20 C-atoms, X = 0 and $R_1$ = trialkylammonium methyl with 1 to 3 C-atoms per alkyl group.

3. 1-Hexadecylpropanediol-(1,2)-phosphocholine.

4. 1-Oleylpropanediol-(1,2)-phosphocholine.

5. 1-Hexadecylpropanediol-(1,2)-phospho-(N,N,N-trimethyl)-propanolamine.

6. 1-Oleylpropanediol-(1,2)-phospho-(N,N,N-trimethyl)-propanolamine.

7. 1-Oleylpropanediol-(1,2)-phospho-(N,N,N-trimethyl)-butanolamine.

8. 1-Hexadecylpropanediol-(1,2)-phospho-(N,N,N-trimethyl)-butanolamine.

9. 1-Oleylpropanediol-(1,2)-phospho-(N,N,N-trimethyl)-pentanolamine.

10. 1-Hexadecylpropanediol-(1,2)-phospho-(N,N,N-trimethyl)-pentanolamine.

11. Medicament, characterised in that it contains at least one compound of the general formula I of claim 1 as active material, possibly together with usual pharmaceutical additive and dilution agents.

12. Medicament according to claim 11, characterised in that, apart from the compound of formula I, it contains at least one alkylglycerol of the general formula II

$$\begin{array}{l} H_2C-O-R_6 \\ \quad | \\ \;HC-O-R_7 \\ \quad | \\ H_2C-OH \end{array}$$

in which one of the radicals $R_6$ and $R_7$ signifies an alkyl group with 3 to 12 C-atoms and the other radical an H-atom.

13. Agent according to claim 11 or 12, characterised in that, for the topical treatment of skin tumours, it contains 5 to 200 mg. of compound according to claim 1 per ml. of alkylglycerol.

14. Agent according to claim 13, characterised in that it contains equal parts by weight of nonylglycerol, hexylglycerol, propylglycerol and water.

15. Agent according to one of claims 11 or 12, characterised in that, for the oral treatment of tumours, it is formulated as drinking solution with a daily dose of between 5 and 100 mg./kg. body weight.

16. Agent according to one of claims 11 or 12, characterised in that, for the intravenous treatment of tumours, it contains a compound according to claim 1 in an amount of 5 to 100 mg./kg. body weight in physiological common salt solution.

17. Process for the preparation of compounds of the formula

$$\begin{array}{l} CH_2-O-R \\ | \\ CH-O-PO^{\theta}_2-X-R_1 \\ | \\ (CH_2)_n \\ | \\ CH_3 \end{array} \qquad I$$

in which R signifies a saturated or unsaturated hydrocarbon radical with 12 to 24 C-atoms, which can also be halogen-substituted, X is an oxygen atom, NH or $NR_2$, n signifies a whole number of 0 to 10, $R_1$, is a $C_1$-$C_8$-alkyl group or wherein $R_1$ represents a $C_2$-$C_8$-alkyl group which is unsaturated and/or substituted with halogen, amino, $C_1$-$C_6$-alkylamino, di-$C_1$-$C_6$-alkylamino, tri-$C_1$-$C_6$-alkylamino, hydroxyl, carboxyl, $C_3$-$C_8$-cycloalkyl or phenyl, and wherein $R_1$ can also signify 2-tert.-butyloxycarbonylaminoethyl, 2-tert.-butyloxy-carbonylethyl, 2,3-isopropylidenedioxypropyl-(1), 2,3-dibenzyloxypropyl-(1), 1,3-dibenzyloxypropyl-(2) or N-$C_1$-$C_6$-alkylamino-$C_2$-$C_6$-alkyl when X is an oxygen atom or wherein $R_1$ can also signify 2,3-dihydroxypropyl-(1) when X is the NH group, and $R_2$ represents a 2,3-dihydroxypropyl-(1) group, a $C_1$-$C_8$-alkyl group or a $C_2$-$C_8$-alkyl group which is unsaturated and/or substituted with halogen, amino, $C_1$-$C_6$-alkylamino, di-$C_1$-$C_6$-alkylamino, tri-$C_1$-$C_6$-alkylamino, hydroxyl, carboxyl, $C_3$-$C_8$-cycloalkyl or phenyl, and of their physiologically acceptable salts, characterised in that one reacts a compound of the formula II

$CH_2 - O - R$
|
$CH - OPOCl_2$
|
$(CH_2)_n$
|
$CH_3$

wherein R and n have the given meanings, with a compound of the formula III

$HX - R_1$

wherein X and $R_1$ have the given meanings, hydroxyl groups, carboxyl groups, amino groups or $C_1$-$C_6$-alkylamino groups present can also contain a usual protective group or 2 neighbouring hydroxyl groups can also be acetalised by an aliphatic $C_3$-$C_6$-ketone, in an inert solvent, whereby, for the case in which $R_1$ contains a free hydroxyl group or a free amino group on the C-atom which is adjacent to the C-atom which is linked with the group X, possibly heats the reaction mixture obtained or the reaction product obtained to 60 to 80°C. for the complete ring closure and subsequently possibly treats in an inert agent with water, an inorganic or organic acid or with alkaline agents, in the other cases reacts the reaction mixture obtained or the reaction product obtained with benzyl alcohol, a $C_1$-$C_6$-alkanol or an unsaturated $C_2$-$C_6$-alcohol and subsequently treats the so obtained reaction product with alkali metal bromides, alkali metal iodides, lower alkyl magnesium halides or amines, splits off protective groups possibly present in the compounds obtained, possibly reacts the reaction products obtained, in which $R_1$ contains a halogen atom, with ammonia or an amine of the formula $NR_3R_4R_5$, whereby the radicals $R_3$, $R_4$ and $R_5$ are the same or different and signify hydrogen or $C_1$-$C_6$-alkyl, and/or, in products obtained with an amino group, alkylates this amino group by $C_1$-$C_6$-alkyl groups and possibly converts the products obtained into the salts.

**Revendications**

1. Composés de formule générale

$CH_2 - O - R$
|
$CH - O - PO^{\theta}_2 - X - R_1$
|
$(CH_2)_n$
|
$CH_3$

dans laquelle
R signifie un reste hydrocarboné saturé ou insaturé avec 12 à 24 atomes de C qui peut également être substitué par un halogène, X est un atome d'oxygène, NH ou $NR_2$, n signifie un nombre entier de 0 à 10, $R_1$ est un groupe alkyle en $C_1$ à $C_8$ ou dans laquelle $R_1$ représente un groupe alkyle en $C_2$ à $C_8$ qui est insaturé et/ou substitué par un halogène, un amino, un alkylamino en $C_1$ à $C_6$, un dialkylamino en $C_1$ à $C_6$, un trialkylamino en $C_1$ à $C_6$, un hydroxy, un carboxy, un cycloalkyle en $C_3$ à $C_8$ ou un phényle, dans laquelle $R_1$ peut en outre signifierégalement un 2-tertiobutyloxycarbonylaminoéthyle, un 2-tertiobutyloxycarbonyléthyle, un 2,3-isopropylidènedioxypropyle-(1), un 2,3-dibenzyloxypropyle-(1), un 1,3-dibenzyloxypropyle-(2) ou un N-$C_1$-$C_6$-alkylaminoalkyle en $C_2$ à $C_6$ lorsque X est un atome d'oxygène et dans laquelle $R_1$ peut en outre signifier également un 2,3-dihydroxypropyle-(1), lorsque X est le groupe NH et $R_2$ représente un groupe 2,3-dihydroxypropyle-(1), un groupe alkyle en $C_1$ à $C_8$ ou un groupe alkyle en $C_2$ à $C_8$ qui est insaturé et/ou substitué par un halogène, un amino, un alkylamino en $C_1$ à $C_6$, un dialkylamino en $C_1$ à $C_6$, un trialkylamino en $C_1$ à $C_6$, un hydroxy, un carboxy, un cycloalkyle en $C_3$ à $C_8$ ou un phényle, et leurs sels physiologiquement compatibles.

2. Composé selon la revendication 1, caractérisé en ce que R est un reste alkyle ou alkylène ayant 14 à 20 atomes de C, X = 0 et $R_1$ = trialkylammoniumméthyle avec 1 à 3 atomes de C par groupe alkyle.

3. 1-hexadécyl-propanediol-(1,2)-phosphocholine.

4. 1-oléyl-propanediol-(1,2)-phosphocholine.

5. 1-hexadécyl-propanediol-(1,2-)phospho-(N,N,N-triméthyl)-propanolamine.

6. 1-oléyl-propanediol-(1,2)-phospho-(N,N,N-triméthyl)-propanolamine.

7. 1-oléyl-propanediol-(1,2)-phospho-(N,N,N-triméthyl)-butanolamine.

8. 1-hexadécyl- propanediol-(1,2)-phospho-(N,N,N-triméthyl)-butanolamine.

9. 1-oléyl-propanediol-(1,2)-phospho-(N,N,N-triméthyl)-pentanolamine.

10. 1-hexadécyl-propanediol-(1,2)-phospho-(N,N,N-triméthyl)-pentanolamine.

11. Médicament, caractérisé en ce qu'il contient, à titre de principe actif, au moins un composé de formule générale I de la revendication 1, éventuellement avec les adjuvants et les diluants pharmaceutiques usuels.

12. Médicament selon la revendication 11, caractérisé en ce qu'il contient, outre le composé de formule I, au moins une alkylglycérine de formule générale II

$H_2C - O - R_6$
|
$HC - O - R_7$
|
$H_2C - OH$

dans laquelle un des restes $R_6$ et $R_7$ signifie un groupe alkyle avec 3 à 12 atomes de C et l'autre reste signifie un atome d'H.

13. Agent selon la revendication 11 ou 12, caractérisé en ce qu'il contient, pour le traitement topique des tumeurs de la peau, 5 à 200 mg de composé selon la formule I par ml d'alkylglycérine.

14. Agent selon la revendication 13, caractérisé en ce qu'il contient des parties en poids égales de nonylglycérine, d'hexylglycérine, de propylglycérine et d'eau.

15. Agent selon la revendication 11 ou 12, caractérisé en ce qu'il est formulé en tant que solution buvable pour le traitement oral des tumeurs avec une dose journalière entre 5 et 100 mg/kg de poids de corps.

16. Agent selon la revendication 11 ou 12, caractérisé en ce qu'il contient, pour le traitement intraveineux des tumeurs, un composé selon la formule générale I en une quantité de 5 à 100 mg/kg de poids de corps dans une solution de chlorure de sodium physiologique.

17. Procédé pour la préparation de composés de formule

$CH_2 - O - R$
|
$CH - O - PO^{\theta}_2 - X - R_1$
|
$(CH_2)_n$
|
$CH_3$

dans laquelle
R signifie un reste hydrocarboné saturé ou insaturé avec 12 à 24 atomes de C qui peut également être substitué par un halogène, X est un atome d'oxygène, NH ou $NR_2$, n signifie un nombre entier de 0 à 10, $R_1$ est un groupe alkyle en $C_1$ à $C_8$ ou dans laquelle $R_1$ représente un groupe alkyle en $C_2$ à $C_8$ qui est insaturé et/ou substitué par un halogène, un amino, un alkylamino en $C_1$ à $C_6$, un dialkylamino en $C_1$ à $C_6$, un trialkylamino en $C_1$ à $C_6$, un hydroxy, un carboxy, un cycloalkyle en $C_3$ à $C_8$ ou un phényle, dans laquelle $R_1$ peut en outre signifier également un 2-tertiobutyloxycarbonylaminoéthyle, un 2-tertiobutyloxycarbonyléthyle, un 2,3-isopropylidènedioxypropyle-(1), un 2,3-dibenzyloxypropyle-(1), un 1,3-dibenzyloxypropyle-(2) ou un N-$C_1$-$C_6$-alkylaminoalkyle en $C_2$ à $C_6$ lorsque X est un atome d'oxygène et dans laquelle $R_1$ peut en outre signifier également un 2,3-dihydroxypropyle-(1) lorsque X est le groupe NH et $R_2$ représente un groupe 2,3-dihydroxypropyle-(1), un groupe alkyle en $C_1$ à $C_8$ ou un groupe alkyle en $C_2$ à $C_8$ qui est insaturé et/ou substitué par un halogène, un amino, un alkylamino en $C_1$ à $C_6$, un dialkylamino en $C_1$ à $C_6$, un tiralkylamino en $C_1$ à

$C_6$, un hydroxy, un carboxy, un cycloalkyle en $C_3$ à $C_8$ ou un phényle, et de leurs sels physiologiquement compatibles, caractérisé en ce que l'on fait réagir dans un solvant inerte un composé de formule II

$CH_2 - O - R$
|
$CH - OPOCl_2$
|
$(CH_2)_n$
|
$CH_3$

dans laquelle R et n ont les significations précédentes, avec un composé de formule III

$HX - R_1$

dans laquelle X et $R_1$ possèdent les significations précédentes, les groupes hydroxy, les groupes carboxy, les groupes amino ou les groupes alkylamino en $C_1$ à $C_6$ présents contenir un groupe protecteur classique, respectivement 2 groupes hydroxy voisins pouvant également être acétalisés par une cétone aliphatique en $C_3$ à $C_6$, moyennant quoi, dans le cas où $R_1$ comporte un groupe hydroxy libre ou un groupe amino libre sur l'atome de C qui jouxte l'atome de C relié au groupe X, on chauffe le mélange réactionnel obtenu, respectivement le produit de réaction résultant, au besoin entre 60 et 80° en vue de la cyclisation totale, et traite ensuite, éventuellement dans un milieu inerte, avec de l'eau, un acide inorganique ou organique ou avec des agents alcalins, on fait réagir dans les autres cas le mélange réactionnel obtenu, respectivement le produit de réaction résultant avec de l'alcool benzylique, un alcanol en $C_1$ à $C_6$ ou avec un alcool insaturé en $C_2$ à $C_6$ et traite ensuite le produit de réaction ainsi obtenu avec des bromures alcalins, des iodures alcalins, des halogénures d'alkylmagnésium inférieurs ou des amines, on élimine au besoin dans les composés résultants les groupes protecteurs présents, on fait éventuellement réagir les produits de réaction obtenu dans lesquels $R_1$ contient un atome d'halogène avec de l'ammoniac ou une amine de formule $NR_3R_4R_5$, les restes $R_3$, $R_4$ et $R_5$ étant identiques ou différents et signifiant l'hydrogène ou un alkyle en $C_1$ à $C_6$ et/ou, dans les produits résultants comportant un groupe amino, on alkyle ce groupe amino à l'aide de groupes alkyles en $C_1$ à $C_6$ et transforme éventuellement les produits obtenus en sels.